# EUROPEAN PATENT SPECIFICATION

(11) **EP 2 307 941 B1**
(45) Date of publication and mention of the grant of the patent: **20.08.2014**
(21) Application number: 08781911.6
(22) Date of filing: 16.07.2008
(51) Int. Cl.: G06F 3/023

(54) **MOBILE TELEVISION AND MULTIMEDIA PLAYER KEY PRESENTATIONS**
MOBILFERNSEHEN UND MULTIMEDIA-PLAYER-TASTENPRÄSENTATIONEN
PRÉSENTATIONS DE TOUCHES DE JOUEUR MULTIMÉDIA ET DE TÉLÉVISION MOBILE

(30) Priority: 16.06.2008 US 140001
(43) Date of publication of application: 13.04.2011
(73) Proprietor: QUALCOMM Incorporated, San Diego, CA 92121 (US)
(72) Inventor: SRIVASTAVA, Aditya Narain, San Diego California 92121 (US); ADAPPA, Abhishek, San Diego California 92121 (US)
(74) Representative: O'Neill, Aoife
(86) International application number: PCT/US2008/070213
(87) International publication number: WO 2009/154637

(56) References cited:
- WO-A-2004/107099
- US-A1- 2004 179 041
- US-A1- 2004 248 621

## Description

### FIELD OF THE INVENTION

The present invention relates generally to mobile computer systems, and more particularly to a common keypad interface software layer for use on mobile devices such as cellular telephones.

### BACKGROUND

The usage of mobile electronic devices (mobile devices), such as cellular telephones, is ever increasing due to their portability, connectivity and ever increasing computing power. As mobile devices grow in sophistication, the variety and sophistication of application software is increasing, turning mobile devices into multipurpose productivity tools. Yet, the usefulness of mobile devices and their applications are limited by the small area available for the user-interface. Traditional cellular telephones included a simple keypad of fixed configuration. Recently, mobile devices have been released featuring miniature QWERTY keyboards, touchscreen interfaces, and reconfigurable keys. Further keypad innovations are expected to provide better user-interfaces and support more useful applications.

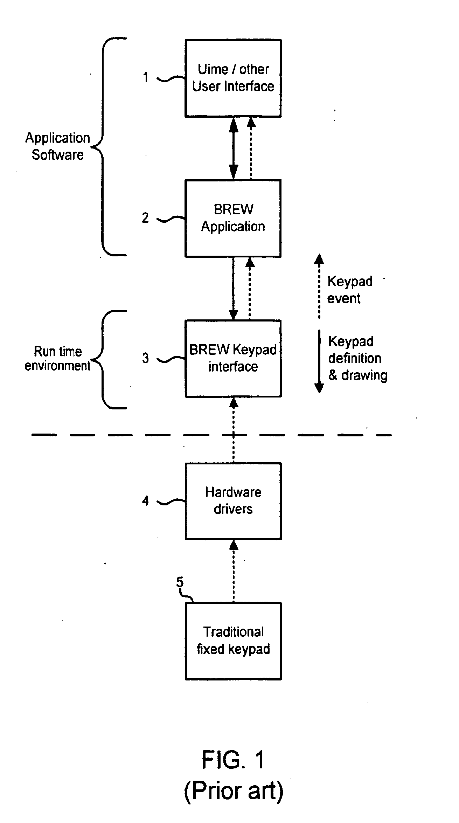

Traditionally, keypads function by transforming the depression of a key into an electrical signal that can be interpreted by the mobile device and its application software. FIG. 1 illustrates a hardware/software architecture of a typical mobile device showing how key press events are communicated to application software. The pressing of a key on a traditional fixed keypad 5 closes a circuit or changes a capacitance or resistance that results in an electrical signal that can be processed by a hardware driver 4. The hardware driver 4 may be circuitry, software or a mixture of hardware and software depending upon the particular mobile device. The hardware driver 4 converts the electrical signal received from the keypad 5 into a format that can be interpreted by a software application running on the mobile device. This signal may be in the form of an interrupted or stored value in a memory table which is accessible by application software. Such an interrupted or stored value in memory may be received by a runtime environment software layer 3, such as the Binary Runtime Environment for Wireless (BREW^{®}), Windows Mobile^{®} and Linux^{®}. The purpose of the runtime environment software layer 3 is to provide a common interface between application software and the mobile device. Thus, key press event signals are passed on to the application layer 2 in the form of a key press event message. The application software must be able to understand the meaning of the key press event, and therefore must be written to accommodate the underlying hardware driver 4 and keypad hardware 5. Key press events may also be communicated to a user-interface layer 1 such as to display the value associated with a particular key.

Using previously known system/hardware architectures such as illustrated in FIG. 1, application developers had to adapt their software to the keypad layout and associated functionality unique to each type of mobile device on which the application might be loaded. Thus, an application configured for a conventional keypad might not function on a mobile device having a touchscreen keypad, and an application written for a touchscreen-equipped mobile device would not operate on a convention mobile device. If an application developer wanted to write a single application that could be used on several kinds of devices, the developer had to anticipate and address in software all of the different kinds of keypads that may be used on the various mobile devices. Thus, the application software would have to include code and information needed to interoperate with each type of device keyboard layout and key press event signal. This requirement increased software complexity and made it difficult for application developers to provide affordable applications that could be run on a variety of devices. Also, application developers could not write applications operable on future mobile devices employing keypads not yet to be developed. As a result, application development has necessarily lagged hardware development. Additionally, the different keypad layouts and functionality used on different kinds of devices made it difficult for developers to create applications having a common look and feel across a variety of mobile devices.

The document US-A-2004/179041 discloses a method for providing a user interface for an application operating on a mobile device comprising the steps of:
- receiving a keypad configuration instruction (via the setting of a flag) from the application in a keypad protocol;
- receiving a key press event signal in the keypad protocol;
- determining a key value associated with the key press event using the received keypad configuration instruction in the keypad protocol and
- communicating the key value to the application.

### BRIEF DESCRIPTION OF THE DRAWINGS

The accompanying drawings, which are incorporated herein and constitute part of this specification, illustrate exemplary embodiments of the invention, and, together with the general description given above and the detailed description given below, serve to explain features of the invention, as claimed.

### SUMMARY OF THE INVENTION

One aspect of the present invention is a method for providing a user interface for a video application on a mobile device as defined in independent claim 1. Another aspect of the invention is a method for controlling a multimedia player from a mobile device as defined in independent claim 7. A first and second mobile device in accordance with the invention are defined in independent claims 8 and 9, respectively. Further embodiments of the invention are specified in the respective appended dependent claims.
FIG. 1 is a hardware/software architecture diagram of a standard prior art cell phone.
FIG. 2 is a system component diagram of a cell phone system enabled by the various embodiments.
FIG. 3 is a portion of a hardware/software architecture diagram according to an embodiment.
FIG. 4 is a component block diagram of a typical cell phone usable with the various embodiments.
FIG. 5 is a hardware/software architecture diagram of an embodiment.
FIG. 6 is a hardware/software architecture diagram of another embodiment.
FIG. 7 is a portion of a software architecture diagram illustrating communication flow according to an embodiment.
FIG. 8 is a process flow diagram of a portion of the functionality enabled by an embodiment.
FIG. 9 is a message flow diagram of messages associated with the process steps illustrated in FIG. 8.
FIG. 10 is a process flow diagram of a portion of the functionality of an embodiment.
FIG. 11 is a data structure suitable for use in an embodiment.
FIG. 12 is a data structure for a key translation table according to an embodiment.
FIG. 13 is a process flow diagram of a portion of the functionality of an embodiment.
FIG. 14 is a data structure of a key press event interrupt according to an embodiment.
FIG. 15 is a process flow diagram of a portion of the functionality of an embodiment.
FIG. 16 is a message flow diagram of messages associated with the process steps illustrated in FIG. 15.
FIG. 17 is a process flow diagram of an embodiment employing a predictive text application in combination with an embodiment.
FIG. 18 is a message flow diagram of messages associated with the process steps illustrated in FIG. 17.
FIGs. 19 and 20 are a top view and a cross-sectional view, respectively, of a keypad employing display keys.
FIGs. 21 and 22 are an illustrations of a cell phone including a touchscreen user-interface.
FIG. 23 is an illustration of a cell phone including displays positioned above keys.
FIGs. 24 and 25 are illustrations of an embodiment employing keypad displays presenting different key value symbols.
FIGs. 26 and 27 are illustrations of a touchscreen cell phone presenting different keypad symbols.
FIGs. 28 and 29 are illustrations of a cell phone including key displays presenting different keypad symbols.
FIG. 30 is an illustration of a conventional cell phone with a television or multimedia player application operating.
FIG. 31 is an illustration of a cell phone employing display keys with a television or multimedia player application operating.
FIG. 32 is an illustration of a cell phone employing a touchscreen user-interface with a television or multimedia player operating.
FIG. 33 is an illustration of a cell phone employing key displays with a television or multimedia player application operating.
FIG. 34 is an illustration of a cell phone having a touchscreen display an interface with a television or multimedia player application operating.

### DETAILED DESCRIPTION

The various embodiments will be described in detail with reference to the accompanying drawings. Wherever possible, the same reference numbers will be used throughout the drawings to refer to the same or like parts. References made to particular examples and implementations are for illustrative purposes, and are not intended to limit the scope of the invention as claimed.

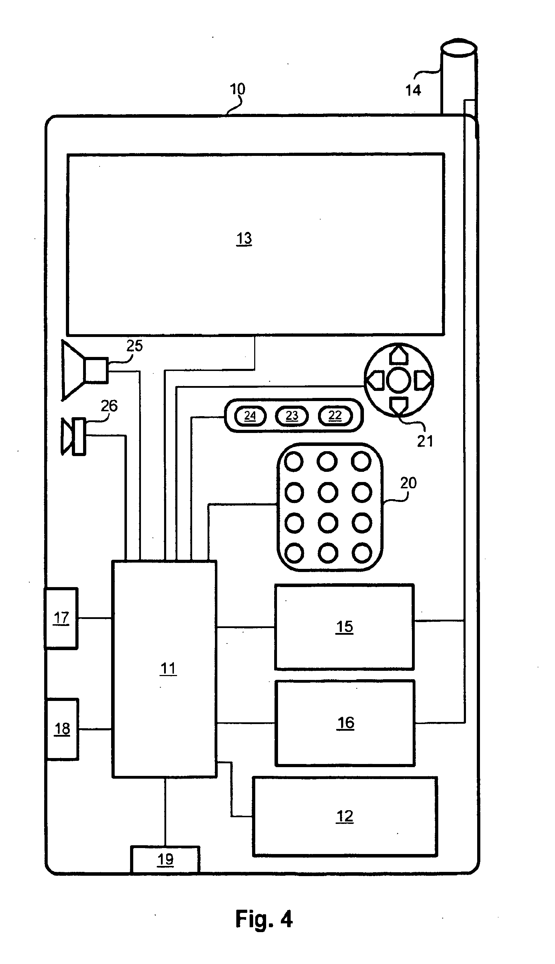

As used herein, the terms "mobile handsets" and "mobile devices" are used interchangeably and refer to any one of various cellular telephones, personal data assistants (PDA's), palm-top computers, laptop computers with wireless modems, wireless electronic mail receivers (e.g., the Blackberry^{®} and Treo^{®} devices), cellular telephones, and multimedia Internet enabled cellular telephones (e.g., the iPhone^{®}), and similar personal electronic devices. A mobile device may include a programmable processor and memory as described more fully below with reference to FIG. 4. In a preferred embodiment, the mobile device is a cellular handheld device (e.g., a cellphone), which can communicate via a cellular telephone network.

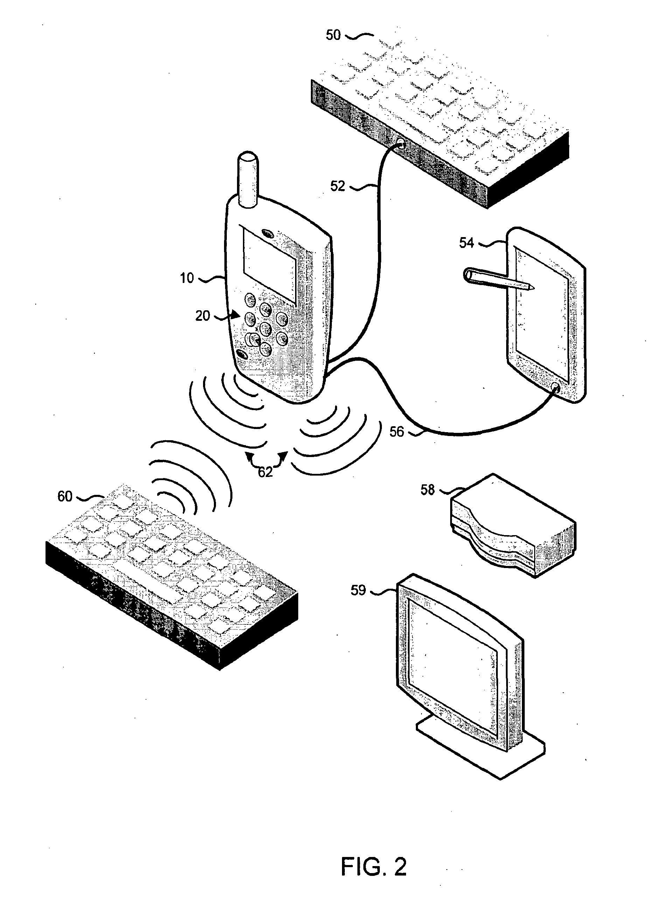

Modern cellular telephones and other mobile devices make use of a variety of different keypads for receiving user inputs. New kinds of keypads providing greater flexibility are expected in the future. Additionally, mobile devices 10 can be connected to or interface with external user-interfaces and devices, such as keyboards, keypads and external media players, as illustrated in FIG. 2. Thus, a mobile device 10 may include a keypad 20, such as described herein or a touchscreen keypad, and also be connected to an external keyboard 50 such as by means of a cable 52, such as a FireWire^{®} or USB cable. A mobile device 10 may also be connected to a touch sensitive display or user-interface, such as a drawing pad 54 by a cable 56. A mobile device 10 may also be configured to interface with external media players, such as a DVD/CD player 58 or television 59, using a local area wireless data link 62, such as according to various embodiments. Instead of or in addition to cable connectors, external user input devices, such as a keyboard 60, may be coupled to the mobile device by a local area wireless data link 62, such as a Bluetooth^{®} wireless data link or an infrared data link (e.g., according to the Infrared Data Association (IrDA) specification). With so many different kinds of user-interfaces available to consumers, application developers face a challenge when writing new application software. Previously, developers had to know the configuration and signaling associated with each keyboard or keypad that might be used in connection with an application and include code and values necessary to allow the application to work with the keypad.

In addition to external keypads, some modern mobile devices include two or more keypads integrated within the device. For example, some cellular telephone designs include a number keypad for use in placing telephone calls, and a miniature keyboard which can be activated by sliding, opening or rotating a portion of the telephone to expose the keyboard. As another example, some cellular telephones may include a fixed keypad and a touchscreen user-interface which may be operated as a passive display or a touch sensitive interface depending upon user selections and application software. Thus, even a mobile device 10 that does not have an external keyboard or interface attached may include a plurality of keypads for interfacing with application software.

In addition, mobile devices are now being programmed with applications very different from those of conventional cellular telephones and PDAs, turning the devices into mobile entertainment resources. For example, some mobile devices can receive and display mobile television programs transmitted by cellular service providers. Also, some mobile devices can present video files, including recorded movies, film clips and similar multimedia materials. Growth in mobile television and multimedia applications for mobile devices is expected. For ease of reference, such mobile television and multimedia applications may be referred to herein and in the claims as "video applications." Such applications involve a simple set of command functions (e.g., play, stop, fast forward, rewind, and volume controls) which do not align with a normal telephone keypad. Using such applications on mobile devices with a conventional keypad requires users to memorize key function assignments. By displaying graphically intuitive function symbols on keys can thus improve user's entertainment experience.

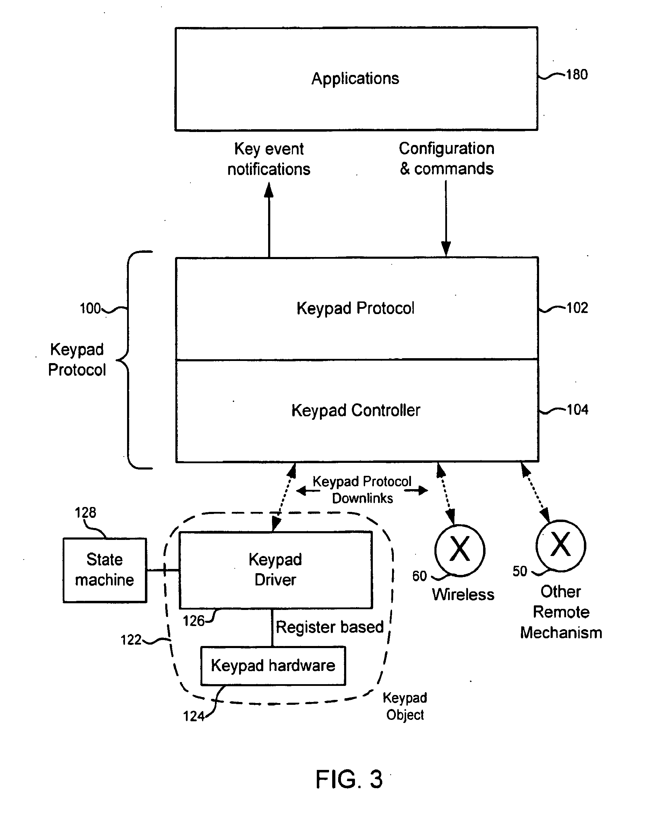

The various embodiments make use of a keypad protocol layer within system software that can simplify the development of application software for operation with a variety of keypads. As illustrated in FIG. 3, the keypad protocol 100 serves as an interface layer between application software 180 and a variety of keypads and interfaces 50, 60, 122. In the embodiments, the keypad protocol can send key event notifications to applications 180 in a standardized format that application developers can anticipate and accommodate with standard software instructions. Similarly, the keypad protocol 100 can receive graphics and configuration commands from the applications 180 in a standard format such as a standard set of application program interfaces (API).

The keypad protocol can receive keypad signals from a keypad driver 126 within a keypad or within the mobile device itself. Similarly, the keypad protocol 100 can send keypad configuration commands to the keypad driver 126. In order to simplify the development of new types of keypads and user-interfaces, the keypad protocol 100 can provide a standard set of interfaces, such as standard data structures and interrupts that the keypad protocol 100 will recognize so that keypad developers have a standard set of hardware interfaces to be accommodated. Similarly, the keypad protocol 100 can provide a standard set of keypad configuration commands so that keypad developers have a standard set of commands and signals that their products must be able to receive and process. Thus, the keypad protocol 100 also facilitates the development of new user-interface devices and technologies.

In an embodiment, the keypad protocol 100 may include two basic components; a keypad protocol software layer 102 and a keypad controller layer 104. The keypad protocol layer 102 may include a standard set of APIs that the application developer can utilize in developing applications software. Thus, the keypad protocol layer 102 can serve as a standard software interface for higher-level software. The keypad controller layer 104 may include software tailored to interface directly with keypad drivers 110. Thus, the keypad controller layer 104 may include the ability to identify a particular key that has been pressed based on a key event signal received from a particular keypad driver 110. Since the nature of keypad functions and interface signals may vary dramatically among different types of keypads, the keypad controller layer 104 provides a software layer for accommodating such complexity and hiding the complexity from the application layer 180.

Some keypad devices 122 may include a state machine 128 that tracks the key press events occurring on the keypad. The keypad controller layer 104 may access the state machine 128 periodically in order to determine the key events which must be interpreted and passed on to applications 180 by the keypad protocol 102.

The embodiments described herein may be implemented on any of a variety of mobile devices. Typically, such mobile devices will have in common the components illustrated in FIG. 4. For example, the mobile device 10 may include a processor 11 coupled to internal memory 12 and a display 13. Additionally, the mobile device 10 will have an antenna 14 for sending and receiving electromagnetic radiation that is connected to a wireless data link and/or cellular telephone transceiver 15 coupled to the processor 11. In some implementations, the transceiver 15 and portions of the processor 11 and memory 12 used for cellular telephone communications are collectively referred to as the air interface since it provides a data interface via a wireless data link. Additionally, the mobile device 10 may include a close to medium range wireless data network transceiver 16, such as a BlueTooth^{®} transceiver for establishing a wireless data link with other components, such as a wireless keypad 60. Mobile device 10 may also include connector plugs for connecting data cables, such as a FireWire connector 17 and/or USB connector 18, to the processor 11, as well as an infrared data link (e.g., IRDA) transceiver 19 connected to the processor 11 for establishing local area wireless data links 62 with external devices such as keyboards 50, 60, or touch screens 54, as well as external media players, such as a DVD/CD player 58 or television 59. Mobile device 10 also typically include a keypad 20 or miniature keyboard and menu selection buttons or rocker switches 21 for receiving user inputs, and may include application-programmable buttons 22, 23, 24. Since both the close to medium range wireless data network transceiver 16 and the IRDA transceiver 19 have limited communication range, for ease of reference these communication transceivers are referred to collectively or alternatively herein as local area wireless data link transceivers.

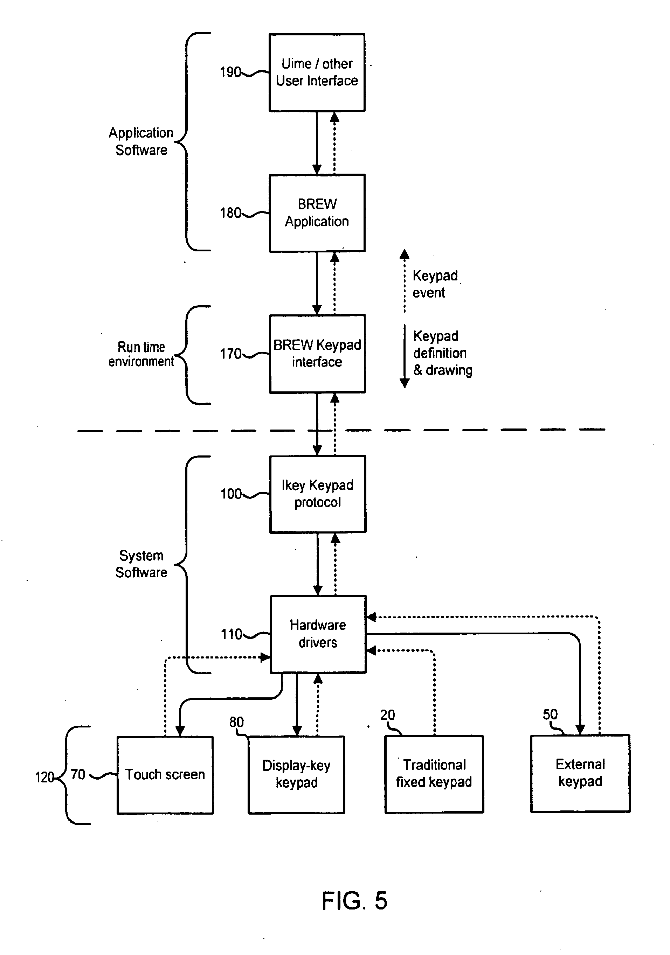

FIG. 5 illustrates a hardware/software architecture implementing an embodiment. As illustrated, the keypad protocol 100 is provided as part of the system software linking to various hardware drivers 110 and to runtime environment software, such as the BREW^{®} layer 170. Hardware user-interfaces 120, such as traditional fixed keypads 20, external keypads 50, a touchscreen 70, a display key keypad 80 (which is described in more detail below) and others may each have their own respective hardware driver 110. Key event signals are sent from a keypad 120 to the associated keypad hardware driver 110. The keypad driver 110 translates the key event electrical signal into a format that can be understood by the keypad protocol 100. As discussed above, this format may be standardized so that hardware driver developers have a common interface specification that can be used in developing drivers for all keypad devices 120.

The keypad protocol 100 configures a key press event message, such as a notification object, which can be interpreted by an application 180. This configured key press event message/notification object may be passed to an application 180 through a runtime environment software layer 170. Alternatively, the keypad protocol 100 may communicate the key press event message/notification object directly to the application 180. The application 180 may also communicate the key press event to a user-interface layer 190. Alternatively, the keypad protocol 100 may communicate a key value to the user-interface layer 190 for presentation on a display 13.

In order to take full advantage of greater capability keypads, such as keypads including display keys and touchscreens, the application 180 needs to be able to provide keypad definition commands and graphics for configuring the keypad. Such definition and graphic information can be provided by the application 180 to the keypad protocol 100 directly or by way of a runtime environment layer 170. Similarly, user-interface software 190 may provide keypad definition and graphic configuration information to the keypad protocol 100. The keypad protocol 100 then uses such definition and graphics information to configure a selected keypad device 20, 50, 70, 80 by providing configuration commands to the associated hardware driver 110. Those keypad devices which can display graphics may receive graphic files (or pointers to graphic files) from their hardware driver 110 as described in more detail below.

FIG. 5 also illustrates another advantage of the keypad protocol 100. A mobile device 10 may be connected to any number of different keypads and other user-interface devices. An application 180 may only use one keypad or user-interface device. By including a keypad protocol 100 between the application layer 180 and the hardware drivers 110, application developers can be provided with a simple way for application software to identify available keypads 120 and select a particular keypad for use. Thus, while a mobile device 10 may include a number of keypad interfaces, the application 180 need only deal with a single keypad using a common set of keypad interface commands and APIs. Also, the application 180 may select an optimum keypad from a number of keypads available to it. The keypad protocol 100 simplifies this selection and interaction with the selected keypad.

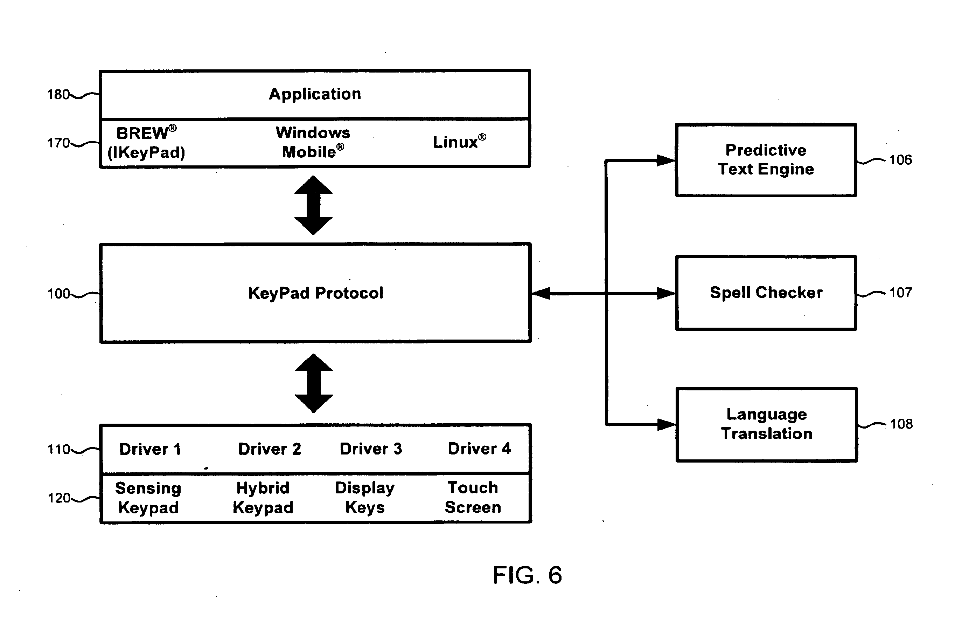

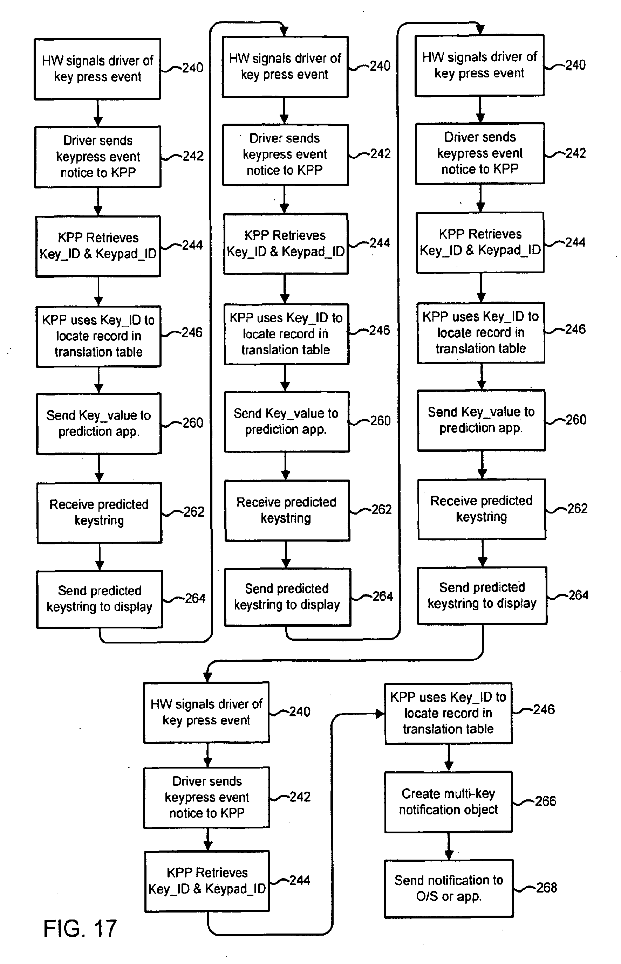

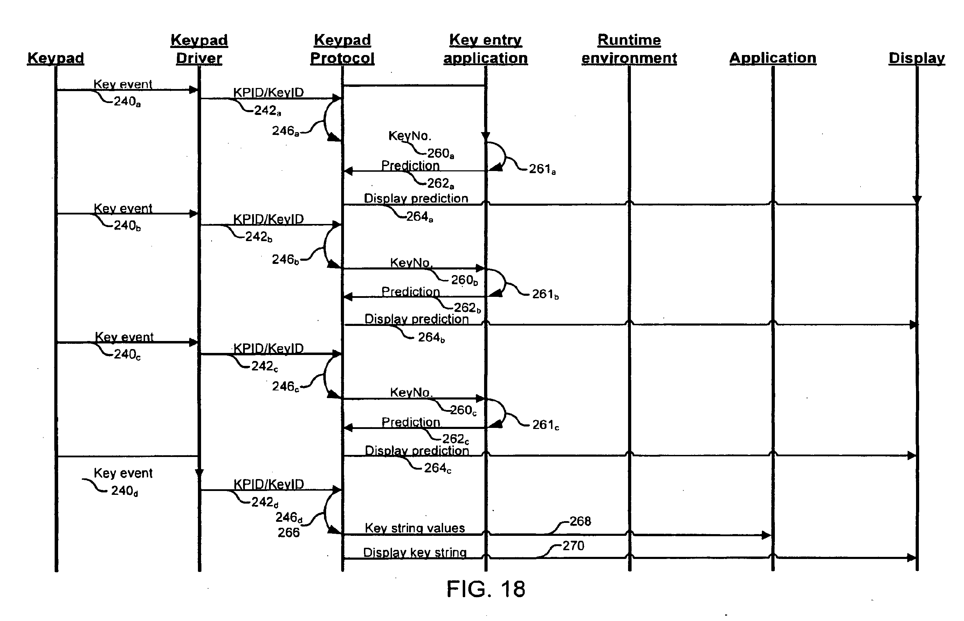

In addition to simplifying the interface between an application 180 and a plurality of keypads 120, the keypad protocol 100 may also interact with application software related to key entry interpretation, such as predictive text, spellchecking and language translation applications. This option is illustrated in the hardware/software architecture diagram shown in FIG. 6. Since the keypad protocol 100 determines the key values associated with each key press event, this information can be directed to key entry applications 106, 107, 108. As described in more detail below with reference to FIGs. 17 and 18, when a key entry application, such as a predictive text engine 106, is activated, the keypad protocol 100 sends each key value to the predictive text engine 106, and then forwards to the application 180 the information received from the predictive text engine 106. By including the key entry application interface within the keypad protocol 100, all key entry related functionality can be handled by the system software. In this manner, the information generated by the key entry applications can be passed to the application layer 180, thereby simplifying application software.

FIG. 6 also shows that the runtime environment layer 170 may be any one or more of the known operating systems available for use in mobile devices. For example, in addition to the BREW^{®} runtime environment, Windows^{®} Mobile and a Linux^{®} operating systems may interface with the keypad protocol 100.

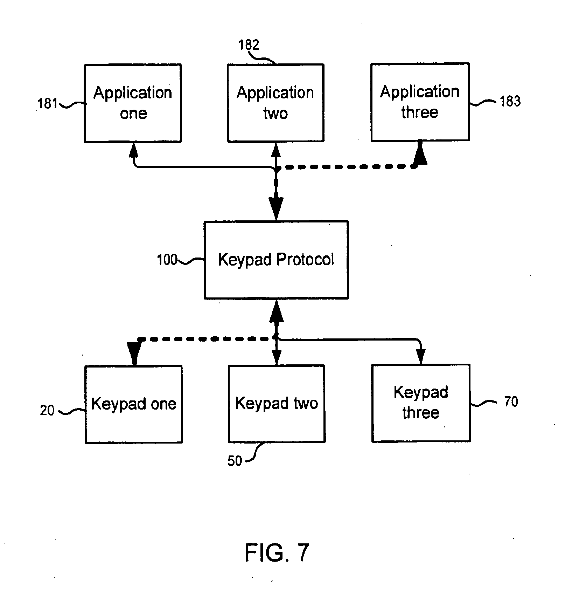

In the various embodiments, the keypad protocol 100 can serve as a common interface for a plurality of applications 181, 182, 183 which may interface with one of the plurality of keypads 20, 50, 70, as illustrated in FIG. 7. At any given time, the keypad protocol 100 may be interfacing with the application in control of processing, such as application three 183, and with the particular keypad selected by that application, such as keypad one 20. If processing shifts to another application, such as application one 181, the same keypad protocol 100 serves as the interface to the keypad selected by that application, such as keypad three 70. If two or more applications 181, 182, 183 have selected and configured a particular keypad, such as keypad one 20, the keypad protocol 100 can keep track of the keypad configuration and definitions associated with each of the applications 181, 182, 183. In this manner, each application 181, 182, 183 may configure the same keypad in a different manner, while the keypad protocol 100 serves as a common interface that does not need to be reconfigured as processing shifts between and among applications.

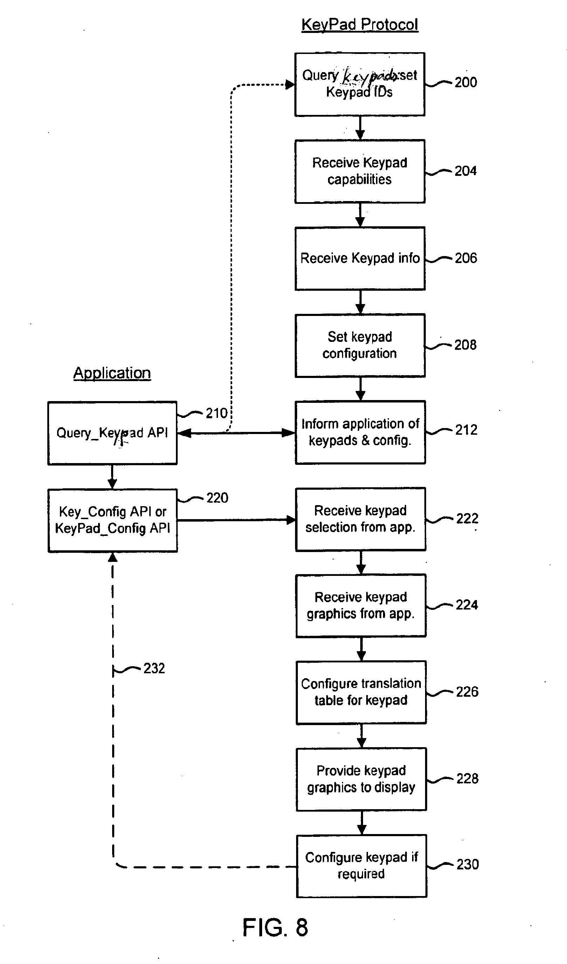

When an application 180 is first started, it may interact with the keypad protocol 100 in order to select a particular keypad and configure the selected keypad for operation consistent with the application's functionality. Example steps for this process are illustrated in FIG. 8. The keypad protocol 100 may periodically determine the keypads 120 coupled to the mobile device 10 by querying the keypads 120 or keypad drivers 110, step 200. Keypads that are activated or attached to the mobile device 10 may respond with a signal indicating their availability. The keypad protocol 100 receives such signals and may assign an ID (e.g., a sequential ID number) to each available keypad, step 200. Alternatively, the keypad protocol 100 may assign the keypad ID and inform each keypad driver of its assigned ID. The keypad protocol 100 may also request and receive information regarding the keypad capabilities, step 204. This may be in the form of a standard information signal provided by the respective keypad driver 110. Alternatively, the keypad 120 or its keypad driver 110 may provide a standard identification of the type of keypad, and enabling the keypad protocol 100 to determine its capabilities from a table of capabilities maintained in memory. Additionally, the keypad protocol 100 may receive other keypad information that may be provided by the keypad driver or the keypad itself, step 206. The keypad protocol may also provide some configuration information to the keypad 120 or the keypad driver 110, step 208. At this point, the keypad protocol 100 has the information necessary to inform an application 180 of the keypads available and their capabilities.

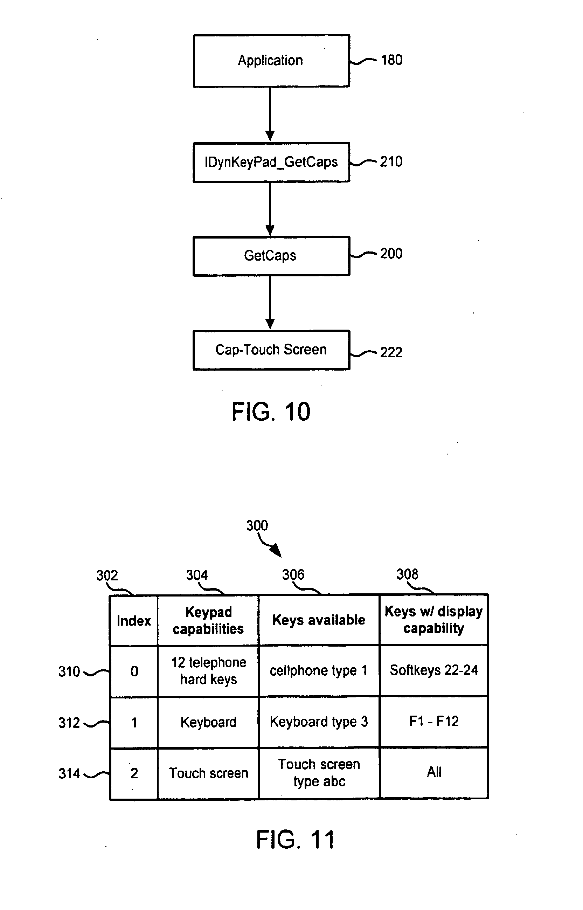

When an application 180 is loaded or otherwise needs to determine the available keypads 120 and their capabilities, the application may ask for this information from the keypad protocol 100, such as by issuing an API, step 210. For illustrative purposes, an example API entitled "Query_Keypad" is illustrated in the figures for performing this function. This API may simply ask the keypad protocol 100 to inform the application 180 of the keypads that are available for use as well as their various capabilities (e.g., configurable keypad or touchscreen). Upon receiving such a Query_Keypad API, the keypad protocol 100 may inform the application of the available (i.e., activated and connected) keypads and their capabilities, step 212. Alternatively, receipt of the Query_Keypad API, step 210, may prompt the keypad protocol 100 to execute the process of determining the attached keypads, steps 200 through 208, as described above. The format for informing the application of available keypads may be standardized in order to provide a common interface for application developers. The format of the information may be any suitable data structure, such as the data structure described below with reference to FIG. 11.

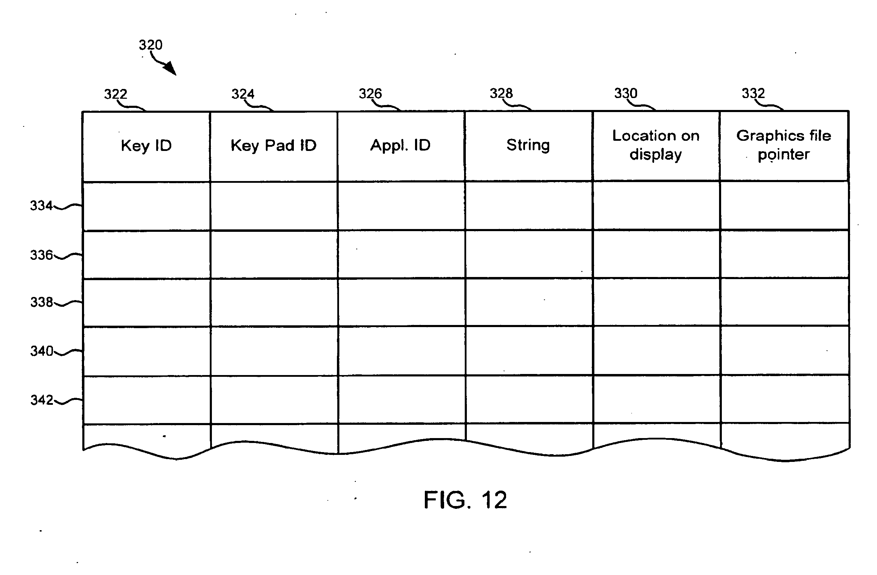

Upon receiving the keypad availability and configuration information, an application may select a particular keypad and provide configuration information to the keypad protocol, step 220. This selection and configuration step may be in the form of an API to provide a common application interface for application developers. For illustrative purposes, example APIs entitled "Key_Config" and "Keypad_Config" are illustrated in the figures for performing this function. Such an API may specify the index number of the selected keypad and provide key configuration information on a key-by-key basis. Such configuration information may include the identifier that the application uses for a particular key event, a string to be associated with a particular key or key event, and information that may be used by a graphics keypad to display the key function in a graphical manner. The format and content of such key-by-key configuration information is discussed below with reference to FIG. 12.

The keypad protocol 100 receives the keypad selection from the application 180, step 222 and any graphics files or images associated with the selected keypad, step 224. The keypad protocol 100 may configure a translation table associated with the selected keypad, step 226. Such a translation table can be used by the keypad protocol 100 to determine the appropriate command string or application key identifier to provide to an application 180 in response to each key press event. The keypad protocol 100 may also communicate with the associated keypad driver 110 to provide any graphics associated with particular keys, step 228. Such graphics may be provided on a key-by-key basis that the keypad driver 110 can use to display particular images associated with key functions defined by the application 180. Additionally, the keypad protocol 100 may further configure the keypad if required to match the functionality of the application, step 230. Upon completing the keypad configuration operations, the keypad protocol may inform the application 180 that the keypad is ready for operation, reply 232.

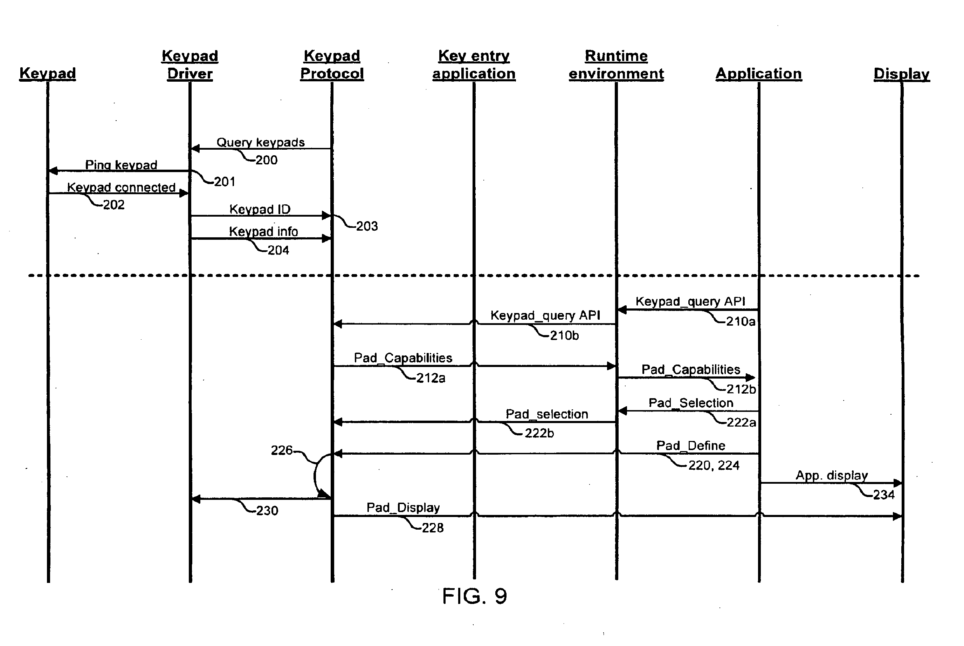

The process steps illustrated in FIG. 8 may be implemented in a number of electronic messages passed among the different hardware and software layers in the mobile device 10, such as illustrated in FIG. 9. To determine which keypads 120 are available, the keypad protocol 100 may issue a query to active keypad drivers 110 requesting a reply as to which keypads are available, message 200. This message may be in the form of a process call, an interrupt, or a flag set in memory that is checked by the main loop of the system software. In response, a keypad driver may ping its associated keypad to confirm that the keypad is attached an active, message 201. If attached, the keypad may return a signal indicating that it is connected and activated, message 202. The keypad driver 110 may then send a message to the keypad protocol indicating that the keypad is active and attached, which may include an identifier of the keypad, message 203. The keypad driver 110 may also provide information regarding the attached keypads, such as their capabilities, configurations or other information that a keypad developer may wish to communicate to a mobile device system software, message 204

Upon activation or during operation, an application 180 may request a list of keypads that are available and activated, such as by issuing a Keypad_Query API, message 210a. The application may communicate directly with the runtime environment, which forwards the Keypad_Query API to the keypad protocol, message 210b. In some implementations, the application may transmit the Keypad_Query API directly to the keypad protocol 100 without involving the runtime environment layer 170. In response to receiving the Keypad_Query, the keypad protocol transmits the available keypads and their capabilities, message 212a. This may be transmitted to the runtime environment layer 170 which transmits the information onto the application 180, message 212b. In some implementations, the keypad protocol 100 may communicate directly with the application 180, bypassing the runtime environment layer 170. As discussed above with reference to FIG. 8, receipt of the Keypad_Query may prompt the keypad protocol 100 to query the attached keypads, message 200.

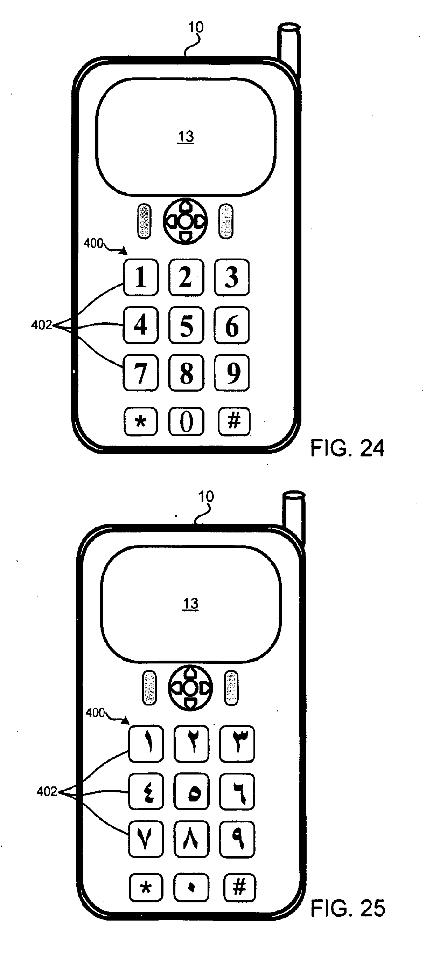

Using information received from the keypad protocol 100, the application 180 may select a particular keypad for use, message 222a. As with other messages, the application 180 may send the keypad selection, message 222a, to the runtime environment layer 170 which forwards the selection to the keypad protocol 100, message 222b. In some implementations, the application 180 may communicate the selection directly to the keypad protocol 100, bypassing the runtime environment layer 170. The application 180 may also send keypad configuration information and graphics files to the keypad protocol 100, messages 220, 224. As with other messages, this information may be sent by way of the runtime environment layer 170 or directly to the keypad protocol 100 as illustrated. The application 180 may also provide graphics files to the display layer, message 234, to present a display consistent with the application and the selected keypad. As discussed more fully below with reference to the examples illustrated in FIGs. 24 through 39, the particular display associated with an application 180 may depend upon the selected keypad.

Using the keypad configuration and graphics files provided by the application 180, the keypad protocol 100 may configure a translation table, process 226, and configure the keypad, message 230. Additionally, the keypad protocol 100 may provide some keypad display files to the display, message 228.

The processing illustrated in FIGs. 8 and 9 may also be initiated whenever a new keypad is connected to the mobile device 10. For example, an application 180 that is running, and thus has already configured a selected keypad, may be notified by system software that a new keypad has been connected to the mobile device. This notification may be in the form of an interrupt communicated to the application 180 by system software, or a system flag set in memory which the application may occasionally check. When an application 180 learns that a new keypad has been connected, the application may again call the Keypad_Query API, step 210, in order to receive information regarding the capabilities of the newly attached keypad. The application may then select and configure the newly attached keypad, step 220, in the manner described above with reference to FIG. 8. Thus, keypads may be activated or coupled to the mobile device 10 at any point during the operation of an application 180. For example, an application 180 may be started before a particular keypad is activated or attached to the mobile device. Upon activation, the application selects and configures the best keypad presently available. Then, when a user activates or attaches a keypad better suited to the particular application, the application 180 can select the newly attached keypad and continue operations using user inputs received from that keypad. In this manner, the keypad protocol 100 facilitates the attachment and configuration of keypads in a flexible manner.

Applications may also interface with the keypad protocol 100 in order to obtain more information about particular keypads that may be useful in making a selection. For example, FIG. 10 illustrates a process by which the application 180 may obtain information regarding the capabilities of a particular keypad. The application 180 may issue a request for the capabilities of a particular keypad by identifying the keypad index and requesting its capabilities, such as by means of an API 210 (e.g., IDynKeyPad_GetCaps). In response to receiving such an API, the keypad protocol 100 may request the capabilities from the keypad driver 110 associated with the keypad ID, step 200. The keypad protocol 100 may then provide the received capabilities information to the application, step 220. In the illustrated example, the application has asked for the capabilities of a particular keypad and is informed that the selected keypad is a touchscreen capable interface.

Information regarding available keypads and their capabilities may be provided to applications by the keypad protocol 100 in a standardized data format, such as illustrated in FIG. 11. The identification and capabilities of a particular keypad may be transmitted in a data record packet 310, 312, 314 including an index 302, a summary of the keypad capabilities 304, an identification of the keys available in the keypad 306, and identification of any keys which have display capability. A separate data record packet may be transmitted for each available keypad, such as data records 310, 312, 314. Alternatively, the keypad protocol 100 may transmit the keypad capabilities data table 300 including data records 310, 312, 314 for each available keypad, with each data record including data fields 302 through 308 providing the identification and capabilities of the associated keypad. The illustrated data structure is provided as an example and is not intended to limit in any way the data format or information that may be provided by the keypad protocol to an application.

The keypad information provided to the application 180 may be in the form of a standardized key set identifier and may use standardized keypad definitions to communicate the particular type of keypad and its capabilities. Alternatively, the keypad capabilities data table 300 may list individual keys that are available and their individual capabilities and configurations. The entries shown in the keypad capabilities table 300 are provided for illustrative purposes only and in a typical implementation are more likely to store data in the form of binary codes that can be recognized and understood by an application 180.

Applications 180 may provide a variety of data and configuration parameters to the keypad protocol 100 for use in interpreting key press events and in translating those events into signals or data structures which the application 180 can process. An example of a data structure for storing such information for use by the keypad protocol 100 is illustrated in FIG. 12. Such a data structure 320 may be composed of any number of data records 334-342 associated with each key on the various keypads. For ease of reference, a first data field 322 may include a key ID that the keypad protocol 100 can use to identify individual keys. This key ID may be communicated to the keypad driver 110 associated with a particular keypad 120 so that the driver and the keypad protocol 100 communicate regarding key press events using the same ID. A second data field 324 may include a keypad ID that the keypad protocol 100 can use to distinguish key events among various connected keypads. The keypad ID data field 324 may include a simple serial listing of attached keypads (e.g., 0, 1, 2 etc.). Alternatively, the keypad ID data field 324 may store a globally unique keypad ID assigned to keypad models or individual keypads by the keypad supplier or the original equipment manufacturer (OEM). For example, the keypad ID could be the MAC ID assigned to the keypad by the OEM. Regardless, the combination of the keypad ID and the key ID can be used to uniquely identify each key press event. The data structure 320 may also include information provided by an application using a particular keypad, such as a data string 326 and an application key ID 328. Such information may be provided by the application 180 to inform the keypad protocol 100 of the particular data string or key ID that the application 180 needs to receive in response to a particular key press event. Thus, an application 180 may define an arbitrary set of key IDs that it uses in its functions and provide those arbitrary key IDs to the keypad protocol 100 so that the protocol can properly inform the application 180 of particular key press events. In this manner, application software can be written to function with standard processes even though keypad layouts and particular keys vary from keypad to keypad, with the keypad protocol 100 providing the necessary translation.

In order to accommodate keypads which include graphic display capabilities, the keypad translation data structure 320 may also include data fields for storing configuration information related to the position (data field 330) and graphics (data field 332) associated with each key. Depending upon the type of keypad, an application 180 may be able to specify locations on any interface display for presenting particular keys, with such information stored in the data field 330. Thus, in a touchscreen display, the application 180 may specify the X-Y coordinates for positioning a particular key. Similarly, the application 180 may provide graphic files to be used by the keypad for displaying key functionality assigned by the application. Rather than store the graphics within the keypad translation data structure 320, the data field may include a pointer (i.e., memory address) to the memory location storing the graphic file associated with the particular key.

To configure keypads using the keypad protocol 100, an application 180 need only provide some of the information to be stored in the keypad translation data structure 320 in the form of a series of data records. Such data records may be linked to standard key identifiers that the keypad protocol can recognize. For example, if the keypad being configured is a standard 12 key numeric keypad, the application 180 may identify a key by its numeral value. Using that identifier, the application 180 can provide the application identifier and/or data string that the keypad protocol 100 can use to inform the application of a key press event, along with other configuration information such as location and graphics file pointer values. The keypad protocol 100 can receive such data records and store them in a data table such as illustrated in FIG. 12.

One of skill in the art will appreciate that keypad translation and configuration data may be stored in memory in a variety of different data structures. The data structure illustrated in FIG. 12 is for example purposes only and is not intended to limit the scope of the disclosure or claims in any way.

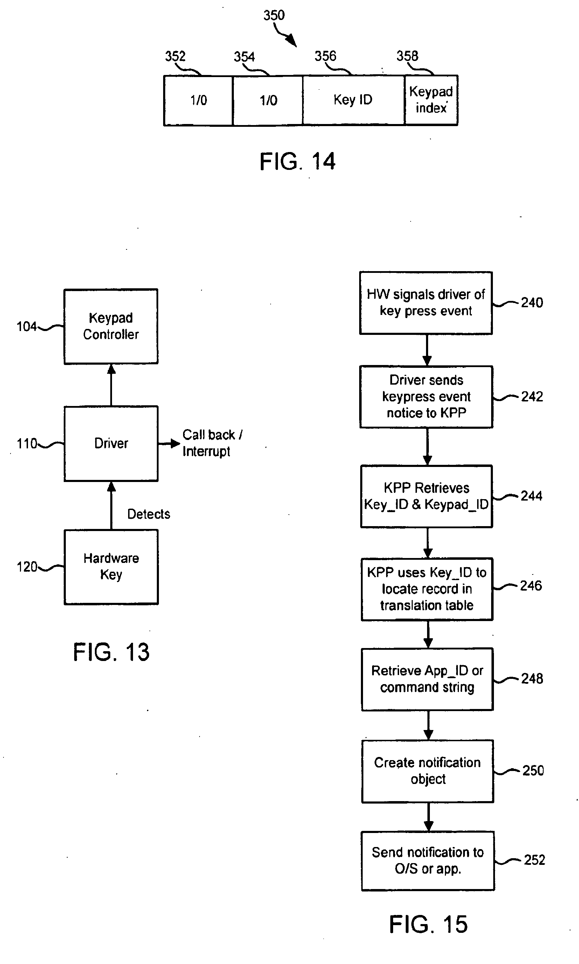

Processing flow of a key press event is illustrated in FIG. 13. When a key is pressed, the event is detected by the keypad hardware 120, which signals the keypad driver software 110. The keypad driver 110 then informs the keypad controller 104 portion of the keypad protocol 100 of the key press event. This may be accomplished directly, such as by a signal sent to the keypad controller 104, or indirectly, such as by setting a callback flag or an interrupt that the system software will recognize periodically and request the key press event information to be provided by the keypad driver.

When a key is pressed on a particular keypad, the keypad 120 and its keypad driver 110 can inform the keypad protocol of the event in a variety of ways, such as by providing an interrupt, or storing data in a particular register or portion of memory used for setting system flags. For example, as illustrated in FIG. 14, a simple data structure 350 may be stored in memory to indicate that a key has been pressed and the identifier associated with the pressed key. For example, such a data structure may include one or more flags 352, 354 that the keypad protocol can periodically check to determine if a key press event is stored in memory. If one of the flags, such as flag 352, is set (i.e., a "1" is stored in the memory field 352) this may indicate that a key press event has occurred and that a corresponding key ID is stored in a particular memory field, such as data field 356. In order to uniquely identify a key press event among a plurality of keypads, the key ID may be stored in data field 356 in conjunction with a keypad ID or index, data field 358. Additional flags may be set to indicate other information concerning the key press event. For example, a flag (e.g., flag 354) may be set to indicate when the key press event includes a simultaneous press of another key, such as a shift, control, or alt key press. As another example, a flag (e.g., flag 354) may be set to indicate that the key press event was not preceded by a key release, indicating that the key is being held down for an extended duration. Any number of additional flags and data fields may be included in the register or data structure to communicate information regarding the key press event that can be interpreted by the keypad protocol 100.

When the keypad protocol 100 is informed of a key press event, it can translate the key press event into information that an application can interpret. An example of method steps that may be implemented by the keypad protocol 100 in receiving a key press event are illustrated in FIG. 15. As discussed above, when a key is pressed, the event is sensed by the keypad hardware and signaled to the associated keypad driver, step 240. The keypad driver translates the key press event into a signal, interrupt, store data or other form of information and provided to the keypad protocol, step 242. Upon receiving a key press event signal from the keypad driver 110, the keypad protocol 100 may retrieve the keypad ID and key ID from memory or from the signal provided by the keypad driver, step 244. Using the key ID and keypad ID, the keypad protocol 100 can locate the corresponding data record within the key translation table 320, step 246. Using the data stored in the corresponding data record, the keypad protocol 100 can retrieve the application ID and/or command string specified by the application 180 corresponding to the particular key press event, step 248. Using that information, the keypad protocol can create a notification object for communication to the application 180, step 250. Finally, the keypad protocol sends the key press notification object to the application 180, step 252. In sending the notification object, the keypad protocol 100 may send the object directly to the application 180 or by way of the operating system or runtime environment 170.

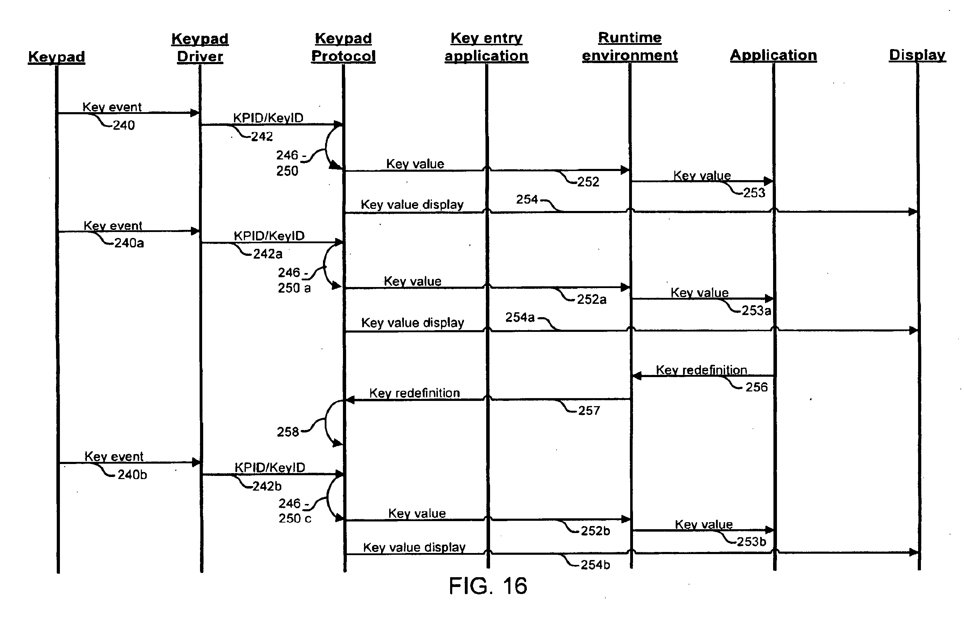

The process of receiving and processing a key press event may be accomplished in a series of messages among the different hardware and software layers in the mobile device 10 as illustrated in FIG. 16. When a key is pressed, the keypad will send a key press event signal to the keypad driver, message 240. In turn the keypad driver sends the keypad ID and key ID to the keypad protocol, message 242. As discussed above, this message may be in the form of information that is saved to a memory location that the keypad protocol may periodically access or access upon detecting a set flag or upon receiving an interrupt. Using this information, the keypad protocol generates the key press notification object, processing steps 246-250, and then transmits the key value to the runtime environment, message 252, for relay to the application 180 in message 253. Alternatively, the keypad protocol may communicate the key value directly to the application 180. Additionally, the keypad protocol 100 may send a key value or graphic to the display, message 254, so the display can reflect the key press event (e.g., presenting on the display the value of the key that was pressed).

A subsequent key press event will be handled in the same way, as illustrated in messages 240a through 254a. Thus, with each key press event, the keypad protocol 100 receives messages from a keypad driver 110 and provides the translated key value information to the application 180 and display.

In some situations, a key press event may prompt an application 180 to redefine key values for subsequent key presses. For example, if the application 180 is a media player, such as an MP3 player, and a first key press event is interpreted by the application as initiating audio play (i.e., the first key press had a "play" function), the application may change the functionality of the same key so that a subsequent press will be interpreted as pausing or stopping the media play (i.e., the second key press will have a "stop" function). FIG. 16 reflects this potential by illustrating that the application 180 may send a key redefinition command (i.e., new configuration information) to the keypad protocol 100, message 256. This message may be relayed by the runtime environment layer 170 to the keypad protocol 100 with a similar key redefinition message 257. Upon receiving a key redefinition message, the keypad protocol 100 may reconfigure the key translation table 320 to reflect the changed key configuration information, process 258. Then subsequent key press events communicated to the keypad protocol in messages 240b and 242b will be interpreted by the keypad protocol 100 according to the revised key translation table 320, processing steps 246-250b. The redefined key value will be transmitted to the application in messages 252b and 253b. Also, the redefined key value may be sent to the display, message 254b.

As mentioned above, the keypad protocol 100 may interact with key entry applications, such as predictive text entry, to simplify application development. For example, a variety of different predictive text applications are available for use on mobile devices. By allocating the role of interfacing with predictive text applications to the keypad protocol 100, the development of application software can be simplified. Application developers do not need to interface their applications with a variety of different predictive text applications. Similarly, predictive text application developers need only interface with the keypad protocol using standard interfaces or API commands.

FIG. 17 illustrates examples steps that could be implemented when a keypad protocol 100 interfaces with a predictive text application 106. As discussed above, when a key is pressed the keypad hardware signals the keypad driver of the event, step 240, prompting the keypad driver 110 to send a key press event notice to the keypad protocol 100, step 242. In turn, the keypad protocol 100 retrieves the keypad ID and key ID, step 244, and uses this information to locate the appropriate data record in the translation table, step 246. The keypad protocol then sends the appropriate key value to the predictive text application, step 260. The predictive text application uses the key value to predict the word being typed and sends the prediction to the keypad protocol 100 where it is received, step 262. The keypad protocol 100 may then send the predictive text to the display so that it can be presented to the user for review and acceptance, step 264. With the next key press event, these steps 242 264 are repeated for the next letter. Similarly, assuming that the user has not accepted a predicted word, the next key press event causes the same steps 242 264 to be repeated, with this process continuing until the user selects the predicted word. For example, if the next key press event processed in steps 240 through 246 determines that a space or other key has been pressed indicating that the user has accepted the predicted text, the keypad protocol may then create a multi-key notification object, step 266, and send this object to the application, step 268. Thus, while four key press events are processed by the keypad protocol 100 in the steps illustrated in FIG. 17, only one multi-key notification object is transmitted to the application 180. In this manner, the application 180 receives more information from the keypad protocol 100 in a shorter amount of time with fewer interrupts, thus allowing the application to streamline processing.

The processing steps illustrated in FIG. 17 may be implemented in a variety of messages transmitted among the different hardware and software layers in the mobile device 10 as illustrated in FIG. 18. As described above, a first key press event detected by a keypad will be communicated to a keypad driver 110 in a key event message 240a prompting the keypad driver 110 to inform the keypad protocol 100 of the keypad ID and key ID, message 242a. The keypad protocol 100 determines the associated key value in processing steps 246a and provides that information to the key entry application 106 in a message 260a. The key entry application 106 processes the key value to predict a word being typed, process 261a, and sends a signal to the keypad protocol 100 providing its prediction, message 262a. The keypad protocol 100 sends the prediction value to the display, message 264a. This process is repeated with the next key event in a similar manner via messages 240b through 264b. Similarly, a third key press event causes the process to be repeated again via messages 240c through 264c. In the illustrated example, a fourth key press event, communicated to the keypad protocol 100 in messages 240d and 242d, is interpreted by the keypad protocol 100 in processing steps 246d to mean that the user has accepted the predicted text displayed as a result of the message 264c communicated to the display. At this point, the keypad protocol 100 generates a multikey notification object, process 266, which is communicated to the application 180 in a multikey string value message or notification object, message 268. Similarly, the keypad protocol 100 may send a mulitkey string value message to the display, message 270, so that the accepted text can be displayed to the user.

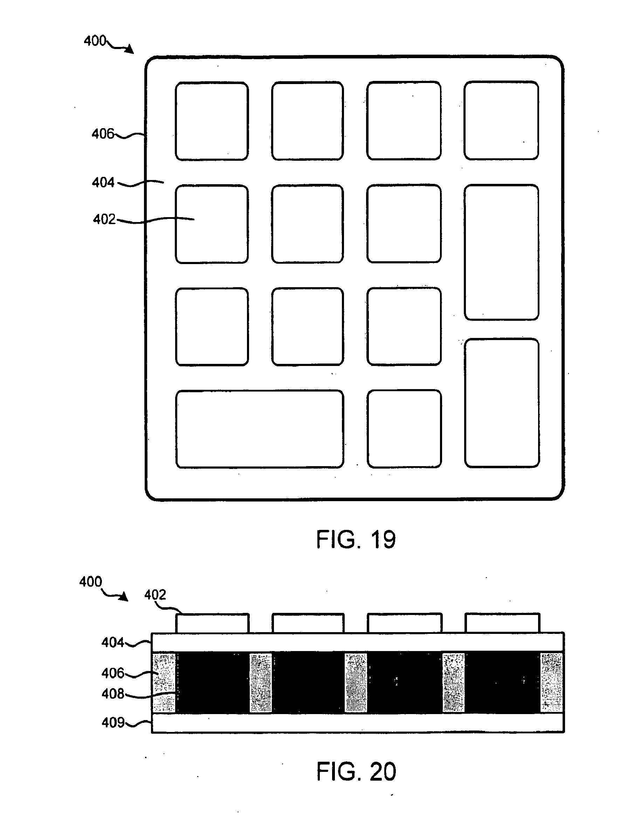

The benefits of the keypad protocol embodiments are particularly evident when future keypad technologies are considered. For example, a keypad technology on the horizon is illustrated in FIGs. 19 and 20 in which each key has a associated with it a small display allowing the key to be labeled dynamically. Such a display-key keypad 400 may include transparent keys 402 positioned within a framework 404 and supported by a support structure 406. A display 408 beneath each transparent key 402 can be controlled by the mobile device processor 11 to present a free-form image viewable through the key 402. A bottom structure 410 may provide support for the displays 408 as well as electrical connections for coupling the displays to the processor 11.

A display-key keypad 400 can provide many advantages to mobile devices since individual key functions can be communicated to users by the images presented on the keys 402 themselves. Thus, users do not need to glance at a display to determine the functionality assigned to a particular key. Instead, words, numbers or symbols can be displayed in the key itself so that its functionality is obvious. In order to enable such a keypad to be easily implemented, applications must define the function associated with each key 402 as well as provide graphics that are presented on each of the key displays 408. This additional complexity can be facilitated by the keypad protocol 100 using the embodiments described above.

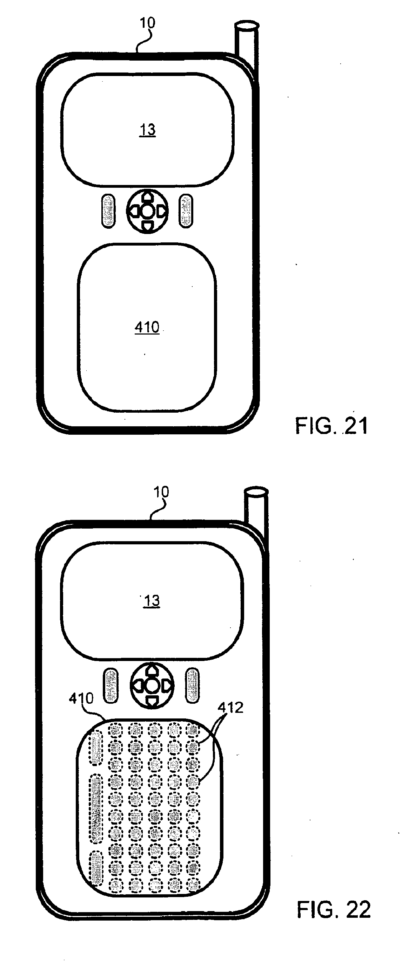

Another form of mobile device keypad/user-interface is a touchscreen, such as illustrated in FIGs. 21 and 22. In such a mobile device 10, a touchscreen 410 provides a completely flexible keypad and user-interface. Keys can be placed anywhere on the touchscreen 410 and provided with graphics to define their function. For example, a miniature keyboard can be presented on the touchscreen display 410 by presenting small virtual buttons 412 with the corresponding meaning identified by a small graphic, such as "A", "2", etc. Touchscreen displays provide great flexibility for creating user-interfaces that are completely configurable by applications. Without the benefits of the keypad protocol 100, this flexibility will impose additional complexity on application software. The keypad protocol embodiments can simplify the development display/keypad configurations for touchscreens. Instead of having to configure specific touchscreens within application software, application developers can provide descriptive configuration information and graphic files to the keypad protocol 100 using standard formats and APIs, leaving the complexity of interfacing with the variety of touchscreen designs to the keypad protocol.

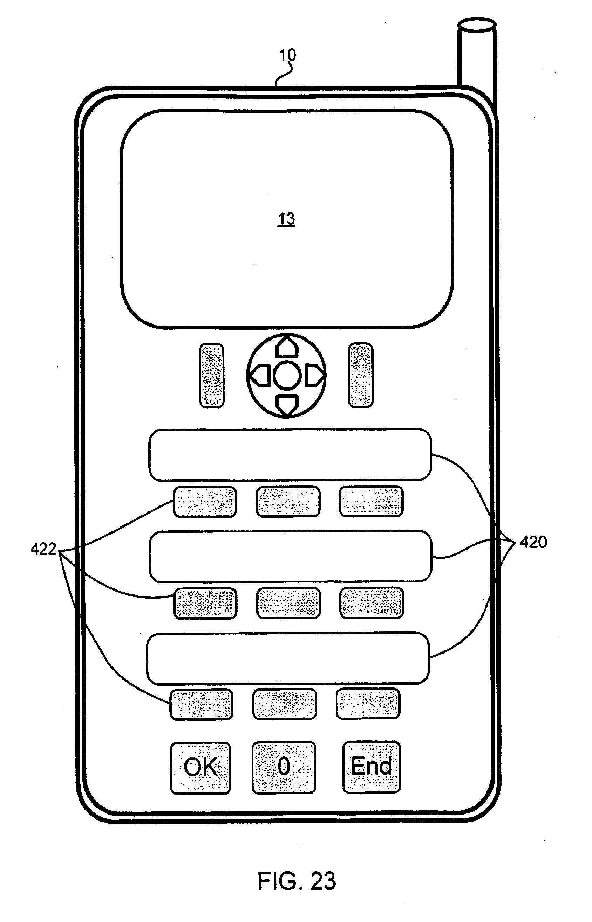

A third form of keypad that may be employed on future mobile devices is illustrated in FIG. 23. In this key keypad configuration, small displays 420 are positioned above, beside or beneath hard keys 422 so that key function definitions can be presented on the small displays. The small displays 420 may be liquid crystal displays similar to the main mobile device display 13. An example of such a keypad display is disclosed in U.S. Patent No. 6,703,963, the entire contents of which are hereby incorporated by reference. The small displays 420 are coupled to the mobile device processor 11 so that the displays can be controlled via application and system software. This keypad design is highly flexible since it enables key functions to be dynamically assigned with the key functions communicated to users in the form of graphics or alphanumeric characters. As with other display concepts described above with reference to FIGs. 20 and 21, instead of having to configure the small keypad displays 420 within application software, application developers can provide descriptive configuration information and graphic files to the keypad protocol 100 in standard formats, leaving the complexity of interfacing with the keypad to the keypad protocol.

The advantages of the various embodiments may be further explained by way of some examples which are illustrated in FIGs. 24 through 39. Referring to FIG. 24, a mobile device 10 which is equipped with a display keypad 400, as described above with reference to FIG. 19 and FIG. 20, can be a cell phone with the display keys 402 displaying numbers 0 - 9 as may be appropriate for many users. However, if users select to have the numbers presented in a different alphabet, that selection can be easily implemented by the keypad protocol with the selected number displays appearing on the keys 402 as illustrated in FIG. 25. This presentation of numbers in a different script can be accomplished using the keypad protocol embodiments without the need to substantially change the telephone application operating on the mobile device 10. The change can be accomplished simply by storing a different set of key graphics in the key translation table 320, for example. Such a mobile device may be more useful in some parts of the world where numerals are presented in a different format.

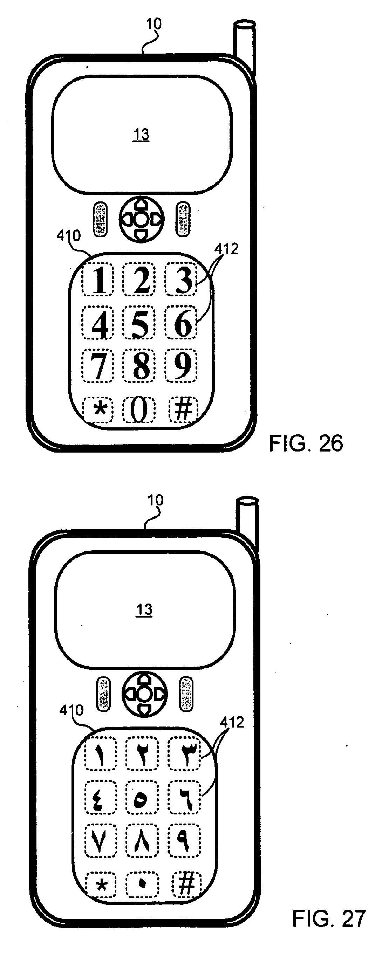

Referring to FIG. 26 and FIG. 27, a mobile device equipped with a touchscreen user-interface 410 can similarly display virtual keys 412 with numerals for a cell phone application. Users who are familiar with Western Arabic numbers may select characters as illustrated in FIG. 26. However, users who are familiar with different characters may select an alternative character set for display as illustrated in FIG. 27.

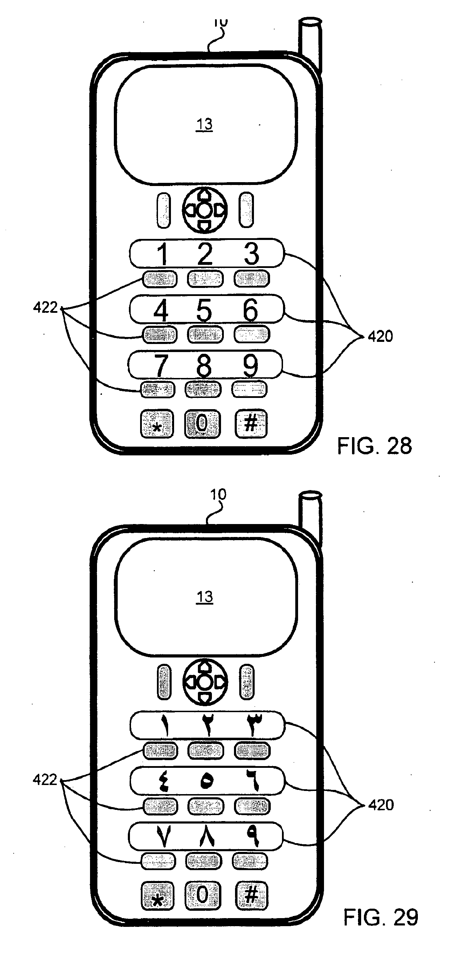

Similarly, referring to FIGs. 28 and 29, a mobile device equipped with keypad displays 420 positioned above keys 422 can be configured by user selection to present Western Arabic numerals above the keys for a telephone application as illustrated in FIG. 28. Users who are familiar with different characters may select an alternative character set for display as illustrated in FIG. 29.

The various embodiments of the keypad protocol enabled the selections illustrated in FIG. 24 through FIG. 29 to be made by users of the various types of cell phones without modification to the telephone application. Thus, a single telephone application software can support the multiple configurations of cell phone keypads and allow users to select their preferred character sets without complicating the application software. In addition to enabling users to control the characters displayed on keypads, users can also control the font size of characters presented on the keypad displays.

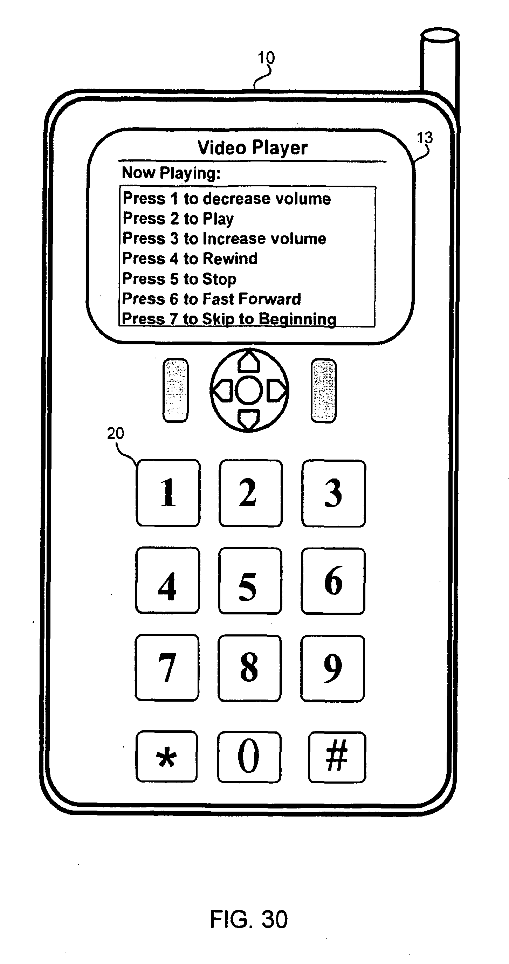

The flexibility and usefulness of the various embodiments are particularly evident when the mobile device is operating applications which can utilize a non-alphabetic user-interface in order to make the operation of the application more intuitive to a user. For example, FIG. 30 illustrates a mobile device 10 executing a mobile television or multimedia player application. In such an application, keypads may be configured to receive user commands associated with the mobile television or multimedia player, such as controlling volume, playing, stopping or rewinding the media, etc. In a typical mobile device with fixed keys 20, the mobile television or multimedia player application must assign a function to various keys. In order to inform the user of the key assignments, a display may need to be presented which associates keys with various application functions. In the illustrated example, the key menu is presented in the mobile device display 13. As this illustration shows, the display of key functions takes up a significant amount of the display 13 area, thus blocking at least a portion of the video display. Consequently, in such applications users are expected to memorize the key function assignments, with a key function menu recallable when needed.

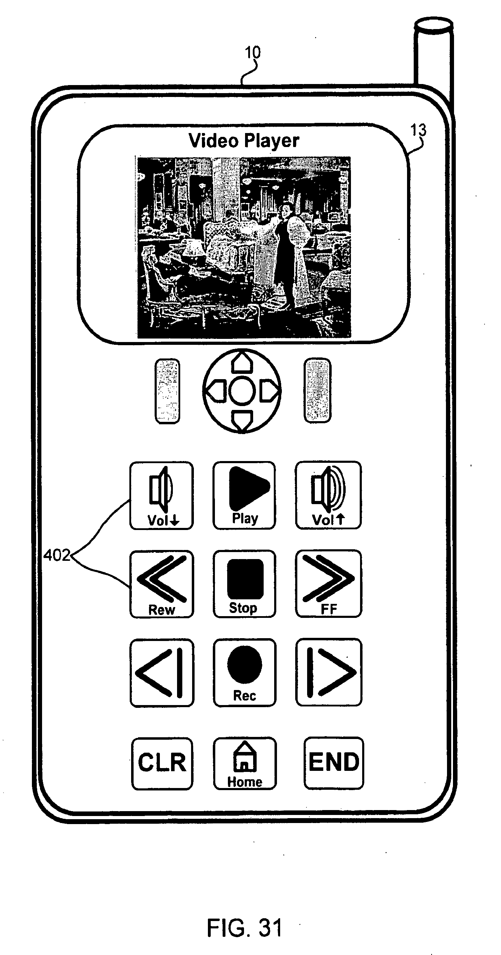

Using a keypad including displays associated with each key in the various keypad protocol embodiments, a more intuitive mobile television or multimedia player user-interface can be provided as illustrated in FIG. 31. As illustrated, the mobile television or multimedia player application in combination with the keypad protocol 100 can present intuitive graphics on each function key 402. By providing the key function as a graphic on the key display 402, the mobile device display 13 can be used to provide information about the media currently accessed. In the illustrated example, the mobile television or multimedia image is presented on the display 13 while the key functions (volume, play, rewind, stop, fast forward, skip to last segment, record and skip to next segment) assigned to the keys are presented using intuitive graphics. Thus, in this embodiment the application provides function graphics to the keypad protocol enabling the assigned keys to display images that enable a more intuitive and useful user-interface while freeing up the display to show the video images without interruption.

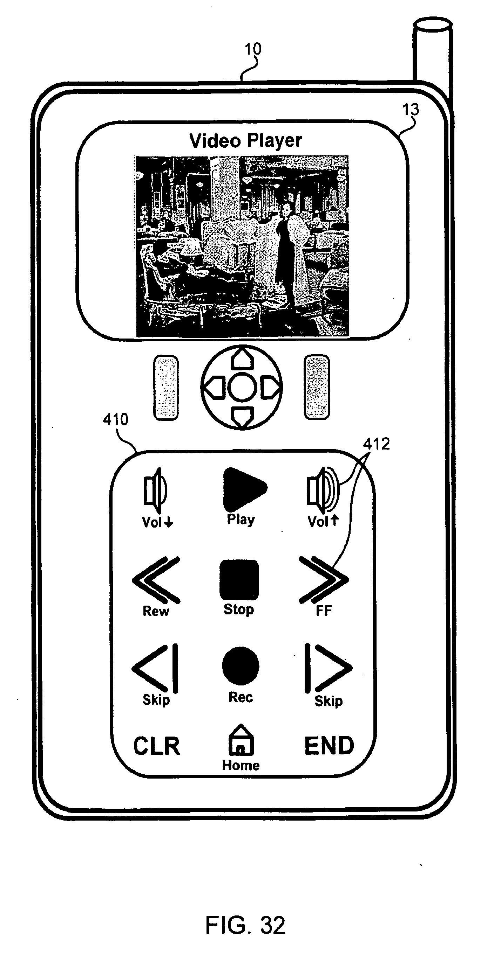

Using the various embodiments, a mobile device 10 including a touchscreen 410 can provide a similar user-interface for a media player application as illustrated in FIG. 32. As illustrated, the media player in combination with the keypad protocol 100 can present intuitive virtual keys 412 associated with the mobile television or multimedia player functions. Using the touch screen to provide graphics related to virtual key 412 functions leaves the mobile device display 13 available for displaying the video images without interruption.

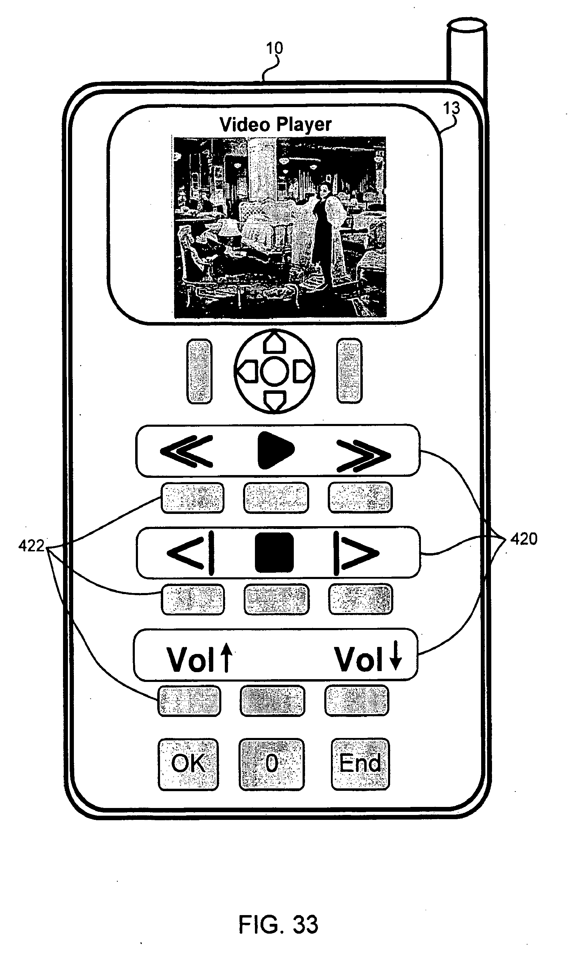

Similarly, a mobile device 10 equipped with keypad displays 420 positioned above keys 422 can provide a similar user-interface for a media player application as illustrated in FIG. 33. As illustrated, the mobile television or multimedia player application software in combination with the keypad protocol 100 can present intuitive virtual key s symbols in the key displays 420. Using the key displays to provide graphics related to key functions leaves the mobile device display 13 available for displaying the video images without interruption.

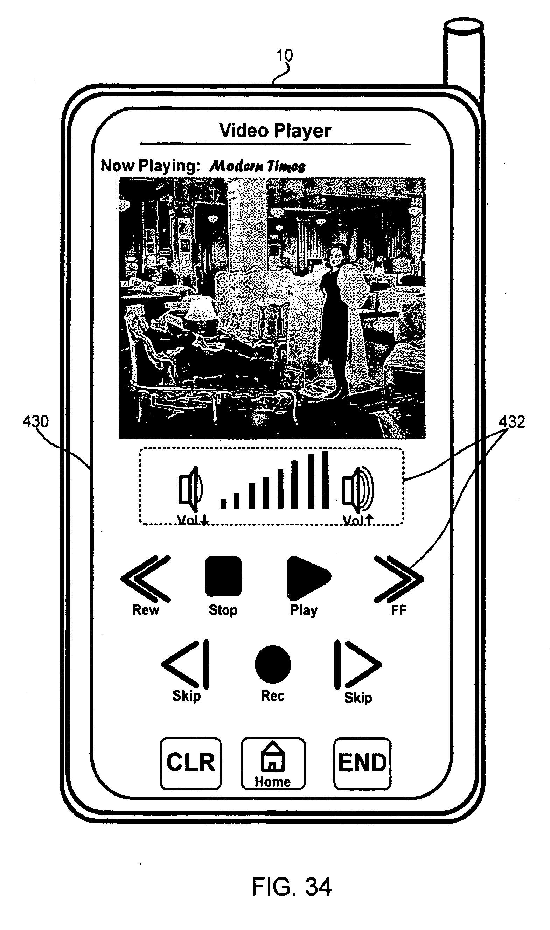

Similarly, a mobile device 10 having a touchscreen display user-interface 430 can provide both intuitive function virtual keys 432, 433 and a large display for the mobile television or multimedia video, as illustrated in FIG. 34. The illustrated example includes both single press keys 432 and touch-slide virtual keys 433. An example touch-slide virtual key 433 may be configured so users can raise or decrease volume by touching and sliding a finger to the left or right within the virtual key boundary.

As discussed above, the graphics to be displayed on or with each key 402, 422 or virtual key 412, 432, 433, and the functionality of each key assigned by the application are managed by the keypad protocol 100. A single mobile television or multimedia player application can function on multiple configurations of mobile devices and keypads, including a conventional keypad 20, a display keypad 400, a touchscreen 410, a keypad with displays 420 and a touchscreen display user-interface 430, as well as external user-interfaces, providing a highly intuitive user-interface, without complicating the application software. As illustrated, a single mobile television or multimedia player application may function on a variety of different devices while presenting a very similar look and feel, including very similar key function graphics.

In a further embodiment, the flexibility of keypad configurations enabled by the keypad protocol can be combined with mobile device transmitter components, such as an infrared IRDA emitter/transceiver 19 or a local area network transceiver 16 shown in FIG. 4, to support applications which configure the mobile device as a television and/or video player controller. Such an application may be implemented in software which configures the mobile device processor 11 to translate keypress events into signals which are emitted by an appropriate mobile device transmitter, i.e., IRDA transceiver 19 or local area network transceiver 16, in order to control an external media player. For example, the mobile device may be configured to act as a remote controller for a television, DVD or CD player or video cassette record (VCR), cable box converter, satellite television receiver, or other similar media receiver/player. Since the mobile device may already include the necessary transmitter (IRDA or local area network) to communicate with such external media receivers/players, this embodiment requires only configuring the mobile device with software to transmit the required control symbols which are well known. By using the keypad protocol embodiments, such an application can assign to the keypad the corresponding player functions, and inform the user of key function assignments using intuitive graphics. Thus this embodiment combines the accessibility of mobile devices-people are less likely to misplace their cellular telephone than the television remote-with the intuitive buttons used on such controllers. FIGs. 30-34 also illustrate this embodiment because the appearance and functioning of the media player keys is similar as shown in those figures with the exception of the video image presented on the display 13.

The various embodiments may be implemented by the processor 11 executing software instructions configured to implement one or more of the described methods. Such software instructions may be stored in memory 12 as the device's operating system software, a series of APIs implemented by the operating system, or as compiled software implementing an embodiment method. Further, the software instructions may be stored on any form of tangible processor-readable memory, including: a random access memory 12, a memory module plugged into the mobile device 10, such as an SD memory chip, an external memory chip such as a USB-connectable external memory (e.g., a "flash drive"), read only memory (such as an EEPROM); hard disc memory, a floppy disc, and/or a compact disc.

Those of skill in the art would appreciate that the various illustrative logical blocks, modules, circuits, and algorithm steps described in connection with the embodiments disclosed herein may be implemented as electronic hardware, computer software, or combinations of both. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present invention as claimed.

The steps of a method or algorithm described in connection with the embodiments disclosed herein may be embodied directly in hardware, in a software module executed by a processor, or in a combination of the two. A software module may reside in processor readable memory which may be any of RAM memory, flash memory, ROM memory, EPROM memory, EEPROM memory, registers, hard disk, a removable disk, a CD-ROM, or any other form of storage medium known in the art. An exemplary storage medium is coupled to a processor such that the processor can read information from, and write information to, the storage medium. In the alternative, the storage medium may be integral to the processor. The processor and the storage medium may reside in an ASIC. The ASIC may reside in a user terminal or mobile device. In the alternative, the processor and the storage medium may reside as discrete components in a user terminal or mobile device. Additionally, in some aspects, the steps and/or actions of a method or algorithm may reside as one or any combination or set of codes and/or instructions on a machine readable medium and/or computer readable medium, which may be incorporated into a computer program product.

## Claims

1. A method for providing a user interface for a video application operating on a mobile device, comprising:
receiving (222, 224) a keypad configuration instruction from the video application in a keypad protocol, the keypad configuration instruction comprising key configuration information on a key-by-key basis;
configuring (226) a translation table in the keypad protocol based on the key configuration information;
receiving (242) a key press event signal in the keypad protocol;
determining (244, 246) a key value associated with the key press event using the translation table in the keypad protocol; and
communicating (250, 252) the key value to the video application.

2. The method of claim 1, further comprising:
receiving in the keypad protocol a request for available keypads from the video application; and
informing the video application of a type of keypad available on the mobile device in response to the request received from the video application.

3. The method of claim 2, wherein the keypad selection is received from the video application in a form of an application program interface (API).

4. The method of claim 2, further comprising:
receiving in the keypad protocol a graphic from the video application related to a video application function assigned to a particular key; and configuring the keypad to display the received graphic file.

5. The method of claim 4, wherein the received graphic is a graphic file.

6. The method of claim 4, wherein the received graphic is a pointer to a graphic file stored in memory of the mobile device.

7. A method for controlling a multimedia player from a mobile device, comprising:
receiving in a keypad protocol a keypad configuration instruction from a multimedia controller application operating on the mobile device, the keypad configuration instruction comprising key configuration information on a key-by-key basis;
storing the keypad configuration information in a keypad translation table, wherein the key value associated with the key press event is determined using the keypad translation table;
receiving a key press event signal in the keypad protocol;
determining a key value associated with the key press event using the translation table in the keypad protocol;
communicating the key value to the multimedia controller application;
configuring a command to be sent to the multimedia player based upon the key value; and transmitting the command to the multimedia player.

8. A mobile device, comprising:
a processor;
a keypad coupled to the processor; and
a memory coupled to the processor, wherein the processor is configured with software instructions to perform all the steps of the method according to claim 1.

9. A mobile device, comprising:
a processor;
a keypad coupled to the processor;
a local area wireless data link transceiver coupled to the processor; and
a memory coupled to the processor, wherein the processor is configured with software instructions to perform all the steps of the method according to claim 7.

10. A tangible storage medium having stored thereon processor-executable software instructions configured to cause a processor of a mobile device to perform a method according to any of claims 1 to 7.

11. A mobile device, comprising:
means (222, 224) for receiving a keypad configuration instruction from a video application in a keypad protocol, the keypad configuration instruction comprising key configuration information on a key-by-key basis;
configuring (226) a translation table in the keypad protocol based on the key configuration information;
means (242) for receiving a key press event signal in the keypad protocol;
means (244, 246) for determining a key value associated with the key press event using the translation table in the keypad protocol; and
means (250, 252) for communicating the key value to the video application.

12. The mobile device of claim 11, further comprising:
means for receiving in the keypad protocol a request for available keypads from the video application; and
means for informing the video application of a type of keypad available on the mobile device in response to the request received from the video application.

13. The mobile device of claim 12, wherein the request for available keypads is received from the video application in a form of an application program interface (API).

14. The mobile device of claim 12, further comprising:
means for receiving in the keypad protocol a graphic from the video application related to a video application function assigned to a particular key; and
means for configuring the keypad to display the received graphic file.

15. A mobile device, comprising:
means for receiving in a keypad protocol a keypad configuration instruction from a multimedia controller application operating on the mobile device, the keypad configuration instruction comprising key configuration information on a key-by-key basis;
means for storing the keypad configuration information in a keypad translation table, wherein the key value associated with the key press event is determined using the keypad translation table;
means for receiving a key press event signal in the keypad protocol;
means for determining a key value associated with the key press event using the translation table in the keypad protocol;
means for communicating the key value to the multimedia controller application;
means for configuring a command to be sent to the multimedia player based upon the key value; and
means for transmitting the command to the multimedia player.

## Patentansprüche

1. Ein Verfahren zum Vorsehen einer Nutzerschnittstelle für eine Videoanwendung, die auf einer Mobileinrichtung arbeitet, das Folgendes aufweist:
Empfangen (222, 224) einer Tastatur- bzw. Tastenfeldkonfigurationsanweisung von der Videoanwendung in einem Tastenfeldprotokoll, wobei die Tastenfeldkonfigurationsanweisung tastenweise Tastenkonfigurationsinformation aufweist;
Konfigurieren (226) einer Übertragungs- bzw. Übersetzungstabelle in dem Tastenfeldprotokoll basierend auf der Tastenkonfigurationsinformation;
Empfangen (242) eines Tastendruckereignissignals in dem Tastenfeldprotokoll;
Bestimmen (244, 246) eines Tastenwertes, der mit dem Tastendruckereignis assoziiert ist, unter Verwendung der Übersetzungstabelle in dem Tastenfeldprotokoll; und
Kommunizieren (250, 252) des Tastenwertes an die Videoanwendung.

2. Verfahren nach Anspruch 1, das weiter Folgendes aufweist:
Empfangen, in dem Tastenfeldprotokoll, einer Anfrage nach verfügbaren Tastenfelder bzw. Tastaturen von der Videoanwendung; und
Informieren der Videoanwendung über eine Art von Tastenfeld, das auf der Mobileinrichtung verfügbar ist, ansprechend auf die Anfrage, die von der Videoanwendung empfangen wird.

3. Verfahren nach Anspruch 2, wobei die Tastenfeldauswahl von der Videoanwendung in einer Form einer Anwendungsprogrammschnittstelle bzw. API (API = application program interface) empfangen wird.

4. Verfahren nach Anspruch 2, das weiter Folgendes aufweist:
Empfangen, in dem Tastenfeldprotokoll, einer Grafik von der Videoanwendung, die mit einer Videoanwendungsfunktion in Beziehung steht, die einer bestimmten Taste zugewiesen ist, und Konfigurieren des Tastenfeldes, um die empfangene Grafikdatei anzuzeigen.

5. Verfahren nach Anspruch 4, wobei die empfangene Grafik eine Grafikdatei ist.

6. Verfahren nach Anspruch 4, wobei die empfangene Grafik ein Zeiger bzw. ein Zeigeelement auf eine Grafikdatei ist, die in dem Speicher der Mobileinrichtung gespeichert ist.

7. Ein Verfahren zum Steuern eines Multimedia-Players von einer Mobileinrichtung, das Folgendes aufweist:
Empfangen, in einem Tastenfeldprotokoll, einer Tastenfeldkonfigurationsanweisung von einer Multimedia-Controller-Anwendung, die auf der Mobileinrichtung arbeitet, wobei die Tastenfeldkonfigurationsanweisung tastenweise Tastenkonfigurationsinformation aufweist;
Speichern der Tastenfeldkonfigurationsinformation in einer Tastenfeldübertragungs- bzw. -übersetzungstabelle, wobei der Tastenwert, der mit dem Tastendruckereignis assoziiert ist, unter Verwendung der Tastenfeldübersetzungstabelle bestimmt wird;
Empfangen eines Tastendruckereignissignals in dem Tastenfeldprotokoll;
Bestimmen eines Tastenwertes, der mit Tastendruckereignis assoziiert ist, unter Verwendung der Übersetzungstabelle in dem Tastenfeldprotokoll;
Kommunizieren des Tastenwertes an die Multimedia-Controller-Anwendung;
Konfigurieren eines Befehls, der an den Multimedia-Player gesendet werden soll, basierend auf dem Tastenwert; und Senden des Befehls an den Multimedia-Player.

8. Eine Mobileinrichtung, die Folgendes aufweist:
einen Prozessor;
eine Tastatur bzw. ein Tastenfeld, das an den Prozessor gekoppelt ist; und
einen Speicher, der an den Prozessor gekoppelt ist, wobei der Prozessor mit Software-Instruktionen konfiguriert ist, um alle Schritte des Verfahrens nach Anspruch 1 auszuführen.

9. Eine Speichereinrichtung, die Folgendes aufweist:
einen Prozessor;
eine Tastatur bzw. ein Tastenfeld, das an den Prozessor gekoppelt ist;
einen Lokalbereichsdrahtlosdatenverbindungstransceiver, der an den Prozessor gekoppelt ist; und
einen Speicher, der an den Prozessor gekoppelt ist, wobei der Prozessor mit Software-Instruktionen konfiguriert ist, um alle Schritte des Verfahrens nach Anspruch 7 auszuführen.

10. Materielles Speichermedium mit darauf gespeicherten, von einem Prozessor ausführbaren Software-Instruktionen, die konfiguriert sind, um einen Prozessor einer Mobileinrichtung zu veranlassen, ein Verfahren nach einem der Ansprüche 1 bis 7 auszuführen.

11. Eine Mobileinrichtung, die Folgendes aufweist
Mittel (222, 224) zum Empfangen einer Tastatur- bzw. Tastenfeldkonfigurationsanweisung von einer Videoanwendung in einem Tastenfeldprotokoll, wobei die Tastenfeldkonfigurationsanweisung tastenweise Tastenkonfigurationsinformation aufweist;
Konfigurieren (226) einer Übersetzungstabelle in dem Tastenfeldprotokoll basierend auf der Tastenkonfigurationsinformation;
Mittel (242) zum Empfangen eines Tastendruckereignissignals in dem Tastenfeldprotokoll;
Mittel (244, 246) zum Bestimmen eines Tastenwertes, der mit dem Tastendruckereignis assoziiert ist, unter Verwendung der Übersetzungstabelle in dem Tastenfeldprotokoll; und
Mittel (250, 252) zum Kommunizieren des Tastenwertes an die Videoanwendung.

12. Mobileinrichtung nach Anspruch 11, die weiter Folgendes aufweist:
Mittel zum Empfangen, in dem Tastenfeldprotokoll, einer Anfrage nach verfügbaren Tastenfelder bzw. Tastaturen von der Videoanwendung; und
Mittel zum Informieren der Videoanwendung über eine Art von Tastenfeld, das auf der Mobileinrichtung verfügbar ist, ansprechend auf die Anfrage, die von der Videoanwendung empfangen wird.

13. Mobileinrichtung nach Anspruch 12, wobei die Anfrage nach verfügbaren Tastenfeldern von der Videoanwendung in einer Form einer Anwendungsprogrammschnittstelle bzw. API (API = application program interface) empfangen wird.

14. Mobileinrichtung nach Anspruch 12, die weiter Folgendes aufweist:
Mittel zum Empfangen, in dem Tastenfeldprotokoll, einer Grafik von der Videoanwendung, die mit einer Videoanwendungsfunktion in Beziehung steht, die einer bestimmten Taste zugewiesen ist; und
Mittel zum Konfigurieren des Tastenfeldes, um die empfangene Grafikdatei anzuzeigen.

15. Eine Mobileinrichtung, die Folgendes aufweist:
Mittel zum Empfangen, in einem Tastenfeldprotokoll, einer Tastenfeldkonfigurationsanweisung von einer Multimedia-Controller-Anwendung, die auf der Mobileinrichtung arbeitet, wobei die Tastenfeldkonfigurationsanweisung tastenweise Tastenkonfigurationsinformation aufweist;
Mittel zum Speichern der Tastenfeldkonfigurationsinformation in einer Tastenfeldübersetzungstabelle, wobei der Tastenwert, der mit dem Tastendruckereignis assoziiert ist, unter Verwendung der Tastenfeldübersetzungstabelle bestimmt wird;
Mittel zum Empfangen eines Tastendruckereignissignals in dem Tastenfeldprotokoll;
Mittel zum Bestimmen eines Tastenwertes, der mit dem Tastendruckereignis assoziiert ist, unter Verwendung der Übersetzungstabelle in dem Tastenfeldprotokoll;
Mittel zum Kommunizieren des Tastenwertes an die Multimedia-Controller-Anwendung;
Mittel zum Konfigurieren eines Befehls, der an den Multimedia-Player gesendet werden soll, basierend auf dem Tastenwert; und
Mittel zum Senden des Befehls an den Multimedia-Player.

## Revendications

1. Procédé pour assurer une interface utilisateur pour une application vidéo opérant sur un dispositif mobile, comprenant :
recevoir (222, 224) une instruction de configuration de clavier à partir de l'application vidéo dans un protocole de clavier, l'instruction de configuration de clavier comprenant des informations de configuration de touches, touche par touche ;
configurer (226) une table de traduction dans le protocole de clavier sur la base des informations de configuration de touches ;
recevoir (242) un signal d'événement d'appui de touche dans le protocole de clavier ;
déterminer (244, 246) une valeur de touche associée à l'événement d'appui de touche en utilisant la table de traduction dans le protocole de clavier ; et
communiquer (250, 252) la valeur de touche à l'application vidéo.

2. Procédé selon la revendication 1, comprenant en outre :
recevoir dans le protocole de clavier à partir de l'application vidéo une requête pour les claviers disponibles ; et
informer l'application vidéo d'un type de clavier disponible sur le dispositif mobile en réponse à la requête reçue de l'application vidéo.

3. Procédé selon la revendication 2, dans lequel la sélection de clavier est reçue à partir de l'application vidéo sous la forme d'une interface de programme d'application (API).

4. Procédé selon la revendication 2, comprenant en outre :
recevoir dans le protocole de clavier à partir de l'application vidéo un graphique associé à une fonction d'application vidéo affectée à une touche particulière ; et configurer le clavier pour afficher le fichier graphique reçu.

5. Procédé selon la revendication 4, dans lequel le graphique reçu est un fichier graphique.

6. Procédé selon la revendication 4, dans lequel le graphique reçu est un pointeur vers un fichier graphique mémorisé dans une mémoire du dispositif mobile.

7. Procédé pour contrôler un lecteur multimédia à partir d'un dispositif mobile, comprenant :
recevoir dans un protocole de clavier une instruction de configuration de clavier à partir d'une application de contrôleur multimédia opérant sur le dispositif mobile, l'instruction de configuration de clavier comprenant des informations de configuration de touches, touche par touche ;
mémoriser les informations de configuration de clavier dans une table de traduction de clavier, la valeur de touche associée à l'événement d'appui de touche étant déterminée en utilisant la table de traduction de clavier ;
recevoir un signal d'événements d'appui de touche dans le protocole de clavier ;
déterminer une valeur de touche associée à l'événement d'appui de touche en utilisant la table de traduction dans le protocole de clavier ;
communiquer la valeur de touche à l'application de contrôleur multimédia ;
configurer une commande à envoyer au lecteur multimédia sur la base de la valeur de touche ; et transmettre la commande au lecteur multimédia.

8. Dispositif mobile, comprenant :
un processeur ;
un clavier couplé au processeur ; et
une mémoire couplée au processeur, le processeur étant agencé avec des instructions de logiciel pour réaliser toutes les étapes du procédé selon la revendication 1.

9. Dispositif mobile comprenant :
un processeur ;
un clavier couplé au processeur ;
un émetteur-récepteur de liaison de données sans fil de réseau local couplé au processeur ; et
une mémoire couplée au processeur, le processeur étant agencé avec des instructions de logiciel pour réaliser toutes les étapes du procédé selon la revendication 7.

10. Support de stockage tangible comportant, mémorisées sur lui, des instructions de logiciel exécutables par un processeur, agencées pour amener un processeur d'un dispositif mobile à réaliser un procédé selon l'une quelconque des revendications 1 à 7.

11. Dispositif mobile comprenant :
des moyens (222, 224) pour recevoir une instruction de configuration de clavier à partir d'une application vidéo dans un protocole de clavier, l'instruction de configuration de clavier comprenant des informations de configuration de touches, touche par touche ;
configurer (226) une table de traduction dans le protocole de clavier sur la base des informations de configuration de touches ;
des moyens (242) pour recevoir un signal d'événement d'appui de touche dans le protocole de clavier ;
des moyens (244, 246) pour déterminer une valeur de touche associée à l'événement d'appui de touche en utilisant la table de traduction dans le protocole de clavier ; et
des moyens (250, 252) pour communiquer la valeur de touche à l'application vidéo.

12. Dispositif mobile selon la revendication 11, comprenant en outre :
des moyens pour recevoir à partir de l'application vidéo dans le protocole de clavier une requête pour des claviers disponibles ; et
des moyens pour informer l'application vidéo d'un type de clavier disponible sur le dispositif mobile en réponse à la requête reçue de l'application vidéo.

13. Dispositif mobile selon la revendication 12, dans lequel la requête pour des claviers disponibles est reçue de l'application vidéo sous la forme d'une interface de programme d'application (API).

14. Dispositif mobile selon la revendication 12, comprenant en outre :
des moyens pour recevoir dans le protocole de clavier un graphique à partir de l'application vidéo concernant une fonction d'application vidéo affectée à une touche particulière ; et
des moyens pour configurer le clavier pour afficher le fichier graphique reçu.

15. Dispositif mobile comprenant :
des moyens pour recevoir dans un protocole de clavier une instruction de configuration de clavier à partir d'une application de contrôleur multimédia opérant sur le dispositif mobile, l'instruction de configuration de clavier comprenant des informations de configuration de touches, touche par touche ;
des moyens pour mémoriser les informations de configuration de clavier dans une table de traduction de clavier, la valeur de touche associée à l'événement d'appui de touche étant déterminée en utilisant la table de traduction de clavier ;
des moyens pour recevoir un signal d'événement d'appui de touche dans le protocole de clavier ;
des moyens pour déterminer une valeur de touche associée à l'événement d'appui de touche en utilisant la table de traduction dans le protocole de clavier ;
des moyens pour communiquer la valeur de touche à l'application de contrôleur multimédia ;
des moyens pour configurer une commande à envoyer au lecteur multimédia sur la base de la valeur de touche ; et
des moyens pour transmettre la commande au lecteur multimédia.
